# EUROPEAN PATENT SPECIFICATION

(11) **EP 4 336 653 B1**
(45) Date of publication and mention of the grant of the patent: **14.10.2026**
(21) Application number: 23744653.9
(22) Date of filing: 12.07.2023
(51) Int. Cl.: G06F 1/16, H01Q 1/22, H01Q 3/30, H04M 1/02, H01Q 1/24, H01Q 19/10, H01Q 21/08

(54) **ELECTRONIC DEVICE COMPRISING ANTENNA**
ELEKTRONISCHE VORRICHTUNG MIT ANTENNE
DISPOSITIF ÉLECTRONIQUE COMPRENANT UNE ANTENNE

(30) Priority: 14.07.2022 KR 20220086904; 02.09.2022 KR 20220111114
(43) Date of publication of application: 13.03.2024
(73) Proprietor: Samsung Electronics Co., Ltd., Suwon-si, Gyeonggi-do 16677 (KR)
(72) Inventor: LIM, Youngjoon, Gyeonggi-do 16677 (KR); KANG, Hyeonuk, Gyeonggi-do 16677 (KR); KIM, Hosaeng, Gyeonggi-do 16677 (KR); LEE, Sangha, Gyeonggi-do 16677 (KR); JO, Jaehoon, Gyeonggi-do 16677 (KR); HWANG, Soonho, Gyeonggi-do 16677 (KR)
(74) Representative: Gulde & Partner
(86) International application number: PCT/KR2023/009921
(87) International publication number: WO 2024/014861

(56) References cited:
- EP-B1- 2 110 882
- KR-A- 20200 098 898
- KR-A- 20200 131 775
- KR-A- 20210 001 709
- KR-A- 20210 048 342
- KR-A- 20210 060 184
- US-A1- 2020 314 223
- US-A1- 2020 365 973
- US-B1- 11 121 450
- US-B2- 11 139 565
- US-B2- 9 350 068

## Description

### [Technical Field]

Various embodiments of the disclosure relate to an electronic device including an antenna.

### [Background Art]

In line with development of wireless communication technologies, electronic devices (for example, electronic devices for communication) have been widely used in daily life, and use of contents has been increasing accordingly. Network capacities are gradually reaching limits due to such an abrupt increase in content use, and in order to satisfy wireless data traffic demands increasing since commercialization of 4^{th} generation (4G) communication systems, there has been research regarding communication systems (for example, 5^{th} generation (5G), pre-5G communication systems, or new radio (NR)) for transmitting or receiving signals by using frequencies in high-frequency (for example, mmWave) bands (for example, 3 GHz to 300 GHz bands). Electronic devices may include at least one antenna operating in such a high-frequency band. The US 2020/365973 A1 discloses an electronic device with a housing and a rear plate. The electronic device includes an array antenna with a plurality of conductive patches, wherein a lateral member of the electronic device includes a conductive portion and a non-conductive portion such that a beam pattern is formed in a direction faced by the lateral member. The US 11 139 565 B2 discloses an electronic device with a housing and a rear plate. The electronic device includes an antenna module with an antenna element, wherein a side member of the electronic device includes a conductive member that can reflect light and a non-conductive portion so that light can pass.

### [Disclosure of Invention]

### [Technical Problem]

An electronic device may include at least one antenna structure (for example, antenna or antenna module) capable of transmitting or receiving radio signals in a substantially mmWave band (for example, frequency band in the range of about 3 GHz to 100 GHz). The antenna structure may include an array antenna having one or more antenna elements (for example, conductive patches and/or conductive patterns) disposed on a substrate at a designated interval. Such antenna elements may be disposed such that a directional signal (for example, beam pattern, signals or directional beam) is formed in a direction in which a substrate surface (for example, first substrate surface or substrate front surface) of the substrate faces. Therefore, the direction of the directional signal of the antenna structure may be determined according to in what manner the substrate is disposed in the inner space of the electronic device. For example, when the substrate surface of the substrate is disposed to face a side surface of the electronic device (for example, disposed vertically) in the inner space of the electronic device, the directional signal may be formed in the direction in which the side surface of the electronic device faces. Similarly, when the substrate surface of the substrate is disposed to face the front surface and/or rear surface of the electronic device (for example, disposed horizontally) in the inner space of the electronic device, the directional signal may be formed in the direction in which the front surface and/or the rear surface of the electronic device faces.

An electronic device may have two or more antenna structures disposed in different positions in order to secure sufficient coverage and to reduce radiation performance degradation due to gripping by the user. In this case, the antenna structures may be disposed such that substrate surfaces of the substrate face different directions (for example, in a direction in which a side surface faces and/or in a direction in which the rear surface faces).

However, in the case of an antenna structure having a substrate surface disposed to face the rear surface of the electronic device (for example, disposed horizontally), it may be difficult to secure a disposition structure, due to interference with peripheral components, or depending on the type of the antenna structure.

Various embodiments of the disclosure may provide an electronic device including an antenna, wherein a directional signal can be formed in a direction different from directions in which substrate surfaces face, while considering efficient disposition design such that a minimal disposition space can be used.

### [Solution to Problem]

According to embodiments of the invention, an electronic device is provided according to claims 1 of the appended set of claims.

### [Advantageous Effects of invention]

An antenna structure according to exemplary embodiments of the disclosure may change the direction of a directional beam by using diffraction and reflection of the directional signal according to the shape of a determined corresponding surface of a conductive member of a housing corresponding to a substrate surface, thereby enabling efficient disposition design of the substrate, and widening beam coverage.

Various other advantageous effects identified explicitly or implicitly through the disclosure may be provided.

### [Brief Description of Drawings]

In connection with description of the drawings, identical or similar components may be given identical or similar reference numerals.
FIG. 1 is a block diagram of an electronic device inside a network environment according to various embodiments of the disclosure.
FIG. 2 is a block diagram of an electronic device for supporting legacy network communication and 5G network communication according to various embodiments of the disclosure.
FIG. 3A is a perspective view of an electronic device in a flat state (or unfolding state) according to various embodiments of the disclosure.
FIG. 3B is a top view of the front surface of an electronic device in a flat state according to various embodiments of the disclosure.
FIG. 3C is a top view of the rear surface of an electronic device in a flat state according to various embodiments of the disclosure.
FIG. 4A is a perspective view of an electronic device in a folding state according to various embodiments of the disclosure.
FIG. 4B is a perspective view of an electronic device in an intermediate state according to various embodiments of the disclosure.
FIG. 5 is an exploded perspective view of an electronic device according to various embodiments of the disclosure.
FIG. 6A is a front perspective view of an antenna structure according to various embodiments of the disclosure.
FIG. 6B is a rear perspective view of an antenna structure according to various embodiments of the disclosure.
FIG. 7A is a partially exploded perspective view of an electronic device having antenna structures disposed thereon according to various embodiments of the disclosure.
FIG. 7B illustrates a partial configuration of an electronic device, seen from behind, having an antenna structure disposed thereon according to various embodiments of the disclosure.
FIG. 7C is a partial sectional view of an electronic device, taken along line 7c-7c in FIG. 7B, according to various embodiments of the disclosure.
FIG. 7D is a partial sectional view of an electronic device, taken along line 7d-7d in FIG. 7B, according to various embodiments of the disclosure.
FIG. 8A and FIG. 8B illustrate a comparison of radiation performance in n261 band (about 28GHz band) according to whether or not a vertically disposed antenna structure exists, according to various embodiments of the disclosure (heat map).
FIG. 9A and FIG. 9B illustrate a comparison of radiation performance in n260 band (about 39GHz band) according to whether or not a vertically disposed antenna structure exists, according to various embodiments of the disclosure (heat map).
FIG. 10A to FIG. 10F illustrate various shapes of a corresponding surface of a first support member according to various embodiments of the disclosure.
FIG. 11A to FIG. 14 illustrate electronic devices according to various embodiments of the disclosure, which have antenna structures disposed thereon.

### [Mode for the Invention]

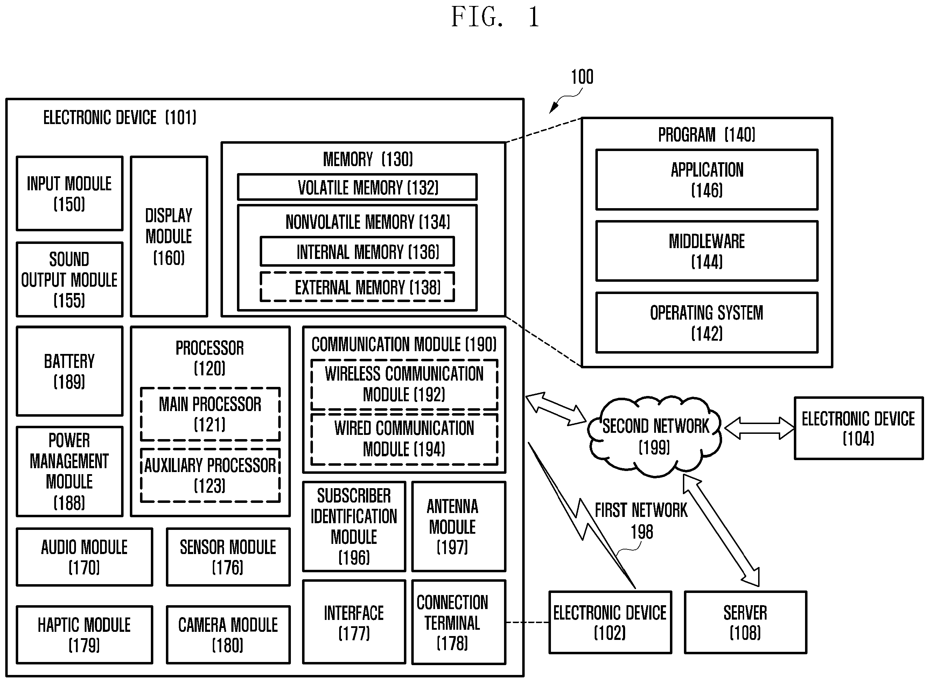

FIG. 1 is a block diagram illustrating an example electronic device in a network environment according to various embodiments.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). The electronic device 101 may communicate with the electronic device 104 via the server 108. The electronic device 101 includes a processor 120, memory 130, an input device 150, an audio output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In various embodiments, at least one (e.g., the display device 160 or the camera module 180) of the components may be omitted from the electronic device 101, or one or more other components may be added in the electronic device 101. In various embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The audio output device 155 may output sound signals to the outside of the electronic device 101. The audio output device 155 may include, for example, a speaker or a receiver. The speaker may be used for general purposes, such as playing multimedia or playing record, and the receiver may be used for an incoming calls. The receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. The display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input device 150, or output the sound via the audio output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. The interface 177 may include, for example, a high definition multimedia interface (HDMI), a universal serial bus (USB) interface, a secure digital (SD) card interface, or an audio interface.

A connection terminal 178 may include a connector via which the electronic device 101 may be physically connected with the external electronic device (e.g., the electronic device 102). The connection terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a image or moving images. The camera module 180 may include one or more lenses, image sensors, image signal processors, or flashes.

The power management module 188 may manage power supplied to the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

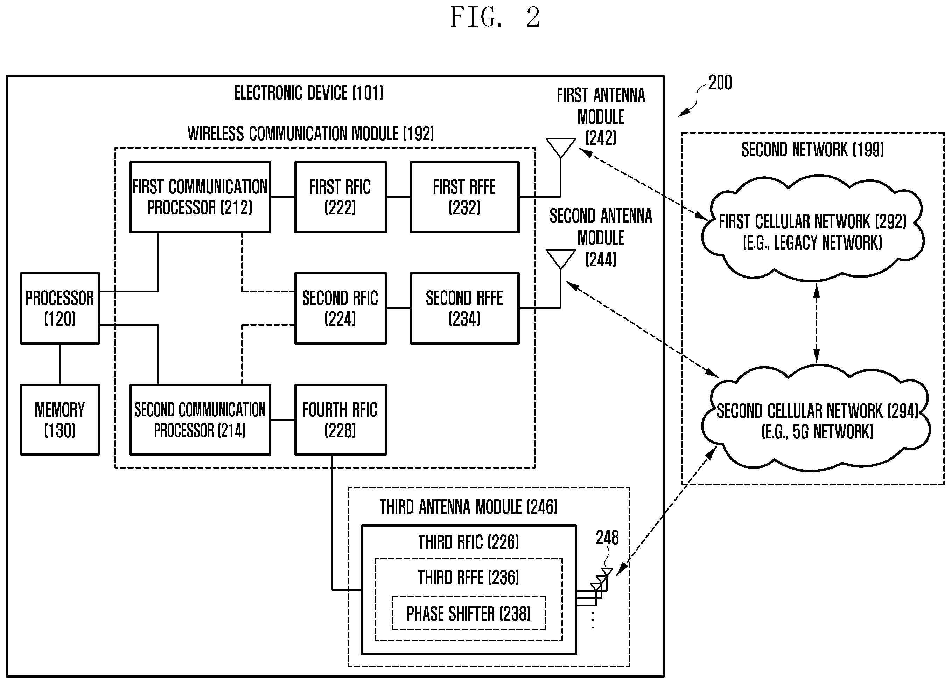

FIG. 2 is a block diagram illustrating an example configuration of an electronic device in a network environment including a plurality of cellular networks according to various embodiments.

Referring to FIG. 2, the electronic device 101 may include a first communication processor (e.g., including processing circuitry) 212, second communication processor (e.g., including processing circuitry) 214, first RFIC 222, second RFIC 224, third RFIC 226, fourth RFIC 228, first radio frequency front end (RFFE) 232, second RFFE 234, first antenna module 242, second antenna module 244, and antenna 248. The electronic device 101 may include a processor 120 and a memory 130. A second network 199 may include a first cellular network 292 and a second cellular network 294. According to an embodiment, the electronic device 101 may further include at least one of the components described with reference to FIG. 1, and the second network 199 may further include at least one other network. According to an embodiment, the first communication processor 212, second communication processor 214, first RFIC 222, second RFIC 224, fourth RFIC 228, first RFFE 232, and second RFFE 234 may form at least part of the wireless communication module 192. According to an embodiment, the fourth RFIC 228 may be omitted or included as part of the third RFIC 226.

The first communication processor 212 may include various processing circuitry and establish a communication channel of a band to be used for wireless communication with the first cellular network 292 and support legacy network communication through the established communication channel. According to various embodiments, the first cellular network may be a legacy network including a second generation (2G), 3G, 4G, or long term evolution (LTE) network. The second communication processor 214 may include various processing circuitry and establish a communication channel corresponding to a designated band (e.g., about 6 GHz to about 60 GHz) of bands to be used for wireless communication with the second cellular network 294, and support 5G network communication through the established communication channel. According to various embodiments, the second cellular network 294 may be a 5G network defined in 3GPP. Additionally, according to an embodiment, the first communication processor 212 or the second communication processor 214 may establish a communication channel corresponding to another designated band (e.g., about 6 GHz or less) of bands to be used for wireless communication with the second cellular network 294 and support 5G network communication through the established communication channel. According to an embodiment, the first communication processor 212 and the second communication processor 214 may be implemented in a single chip or a single package. According to various embodiments, the first communication processor 212 or the second communication processor 214 may be formed in a single chip or a single package with the processor 120, the auxiliary processor 123, or the communication module 190.

Upon transmission, the first RFIC 222 may convert a baseband signal generated by the first communication processor 212 to a radio frequency (RF) signal of about 700 MHz to about 3 GHz used in the first cellular network 292 (e.g., legacy network). Upon reception, an RF signal may be obtained from the first cellular network 292 (e.g., legacy network) through an antenna (e.g., the first antenna module 242) and be preprocessed through an RFFE (e.g., the first RFFE 232). The first RFIC 222 may convert the preprocessed RF signal to a baseband signal so as to be processed by the first communication processor 212.

Upon transmission, the second RFIC 224 may convert a baseband signal generated by the first communication processor 212 or the second communication processor 214 to an RF signal (hereinafter, 5G Sub6 RF signal) of a Sub6 band (e.g., 6 GHz or less) to be used in the second cellular network 294 (e.g., 5G network). Upon reception, a 5G Sub6 RF signal may be obtained from the second cellular network 294 (e.g., 5G network) through an antenna (e.g., the second antenna module 244) and be pretreated through an RFFE (e.g., the second RFFE 234). The second RFIC 224 may convert the preprocessed 5G Sub6 RF signal to a baseband signal so as to be processed by a corresponding communication processor of the first communication processor 212 or the second communication processor 214.

The third RFIC 226 may convert a baseband signal generated by the second communication processor 214 to an RF signal (hereinafter, 5G Above6 RF signal) of a 5G Above6 band (e.g., about 6 GHz to about 60 GHz) to be used in the second cellular network 294 (e.g., 5G network). Upon reception, a 5G Above6 RF signal may be obtained from the second cellular network 294 (e.g., 5G network) through an antenna (e.g., the antenna 248) and be preprocessed through the third RFFE 236. The third RFIC 226 may convert the preprocessed 5G Above6 RF signal to a baseband signal so as to be processed by the second communication processor 214. According to an embodiment, the third RFFE 236 may be formed as part of the third RFIC 226.

According to an embodiment, the electronic device 101 may include a fourth RFIC 228 separately from the third RFIC 226 or as at least part of the third RFIC 226. In this case, the fourth RFIC 228 may convert a baseband signal generated by the second communication processor 214 to an RF signal (hereinafter, an intermediate frequency (IF) signal) of an intermediate frequency band (e.g., about 9 GHz to about 11 GHz) and transfer the IF signal to the third RFIC 226. The third RFIC 226 may convert the IF signal to a 5G Above 6RF signal. Upon reception, the 5G Above 6RF signal may be received from the second cellular network 294 (e.g., a 5G network) through an antenna (e.g., the antenna 248) and be converted to an IF signal by the third RFIC 226. The fourth RFIC 228 may convert an IF signal to a baseband signal so as to be processed by the second communication processor 214.

According to an embodiment, the first RFIC 222 and the second RFIC 224 may be implemented into at least part of a single package or a single chip. According to an embodiment, the first RFFE 232 and the second RFFE 234 may be implemented into at least part of a single package or a single chip. According to an embodiment, at least one of the first antenna module 242 or the second antenna module 244 may be omitted or may be combined with another antenna module to process RF signals of a corresponding plurality of bands.

According to an embodiment, the third RFIC 226 and the antenna 248 may be disposed at the same substrate to form a third antenna module 246. For example, the wireless communication module 192 or the processor 120 may be disposed at a first substrate (e.g., main PCB). In this case, the third RFIC 226 is disposed in a partial area (e.g., lower surface) of the first substrate and a separate second substrate (e.g., sub PCB), and the antenna 248 is disposed in another partial area (e.g., upper surface) thereof; thus, the third antenna module 246 may be formed. By disposing the third RFIC 226 and the antenna 248 in the same substrate, a length of a transmission line therebetween can be reduced. This may reduce, for example, a loss (e.g., attenuation) of a signal of a high frequency band (e.g., about 6 GHz to about 60 GHz) to be used in 5G network communication by a transmission line. Therefore, the electronic device 101 may improve a quality or speed of communication with the second cellular network 294 (e.g., 5G network).

According to an embodiment, the antenna 248 may be formed in an antenna array including a plurality of antenna elements that may be used for beamforming. In this case, the third RFIC 226 may include a plurality of phase shifters 238 corresponding to a plurality of antenna elements, for example, as part of the third RFFE 236. Upon transmission, each of the plurality of phase shifters 238 may convert a phase of a 5G Above6 RF signal to be transmitted to the outside (e.g., a base station of a 5G network) of the electronic device 101 through a corresponding antenna element. Upon reception, each of the plurality of phase shifters 238 may convert a phase of the 5G Above6 RF signal received from the outside to the same phase or substantially the same phase through a corresponding antenna element. This enables transmission or reception through beamforming between the electronic device 101 and the outside.

The second cellular network 294 (e.g., 5G network) may operate (e.g., stand-alone (SA)) independently of the first cellular network 292 (e.g., legacy network) or may be operated (e.g., non-stand alone (NSA)) in connection with the first cellular network 292. For example, the 5G network may have only an access network (e.g., 5G radio access network (RAN) or a next generation (NG) RAN and have no core network (e.g., next generation core (NGC)). In this case, after accessing to the access network of the 5G network, the electronic device 101 may access to an external network (e.g., Internet) under the control of a core network (e.g., an evolved packed core (EPC)) of the legacy network. Protocol information (e.g., LTE protocol information) for communication with a legacy network or protocol information (e.g., new radio (NR) protocol information) for communication with a 5G network may be stored in the memory 130 to be accessed by other components (e.g., the processor 120, the first communication processor 212, or the second communication processor 214).

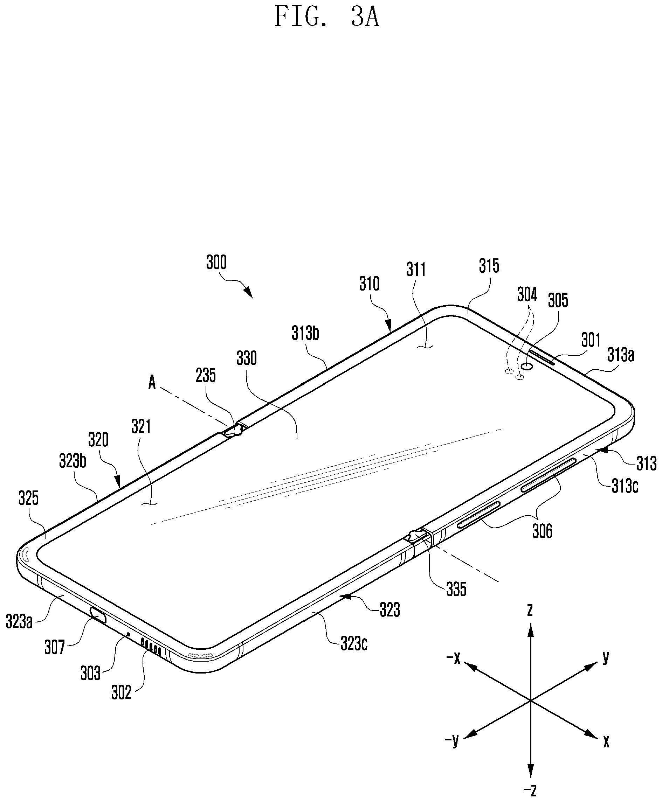

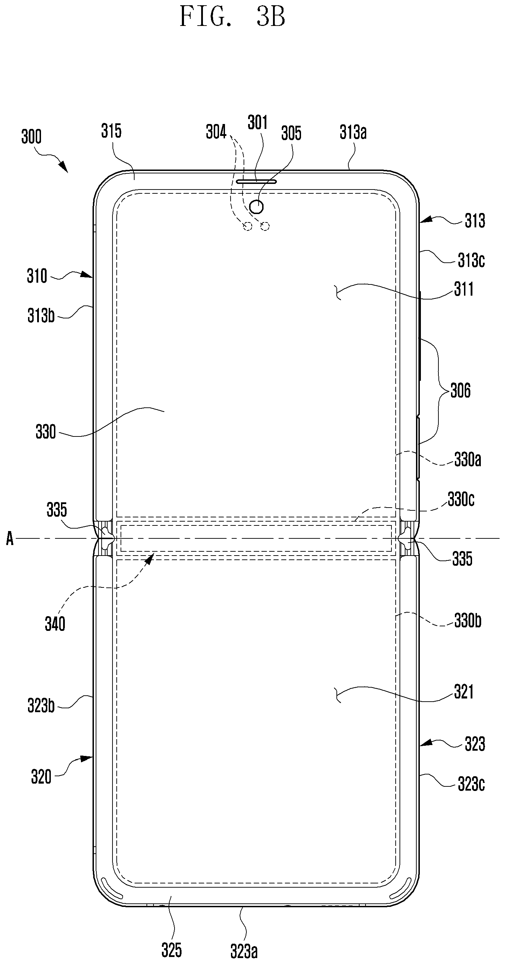

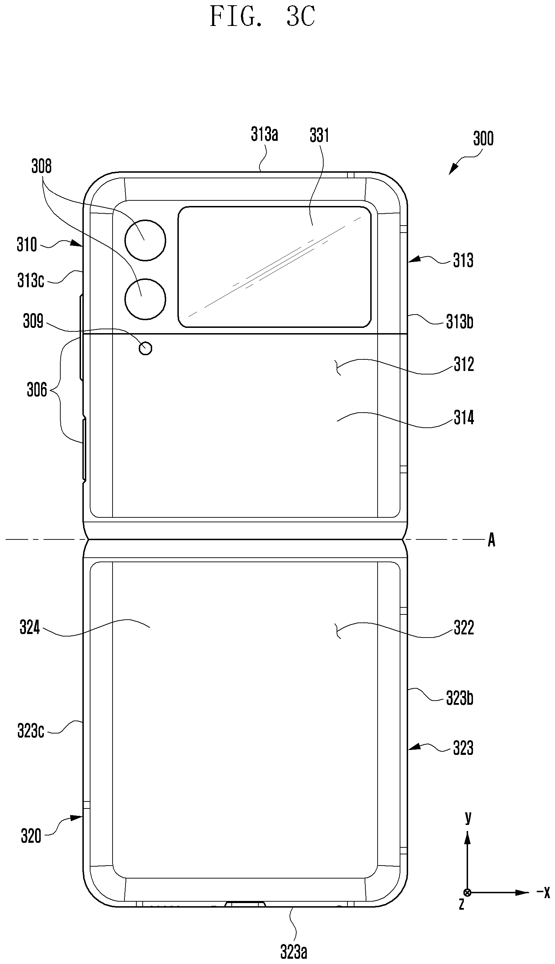

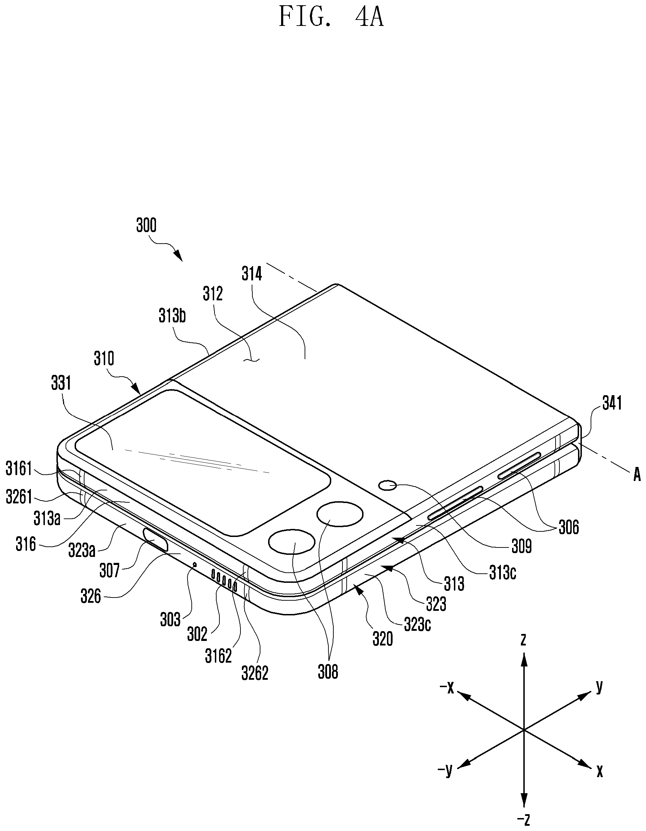

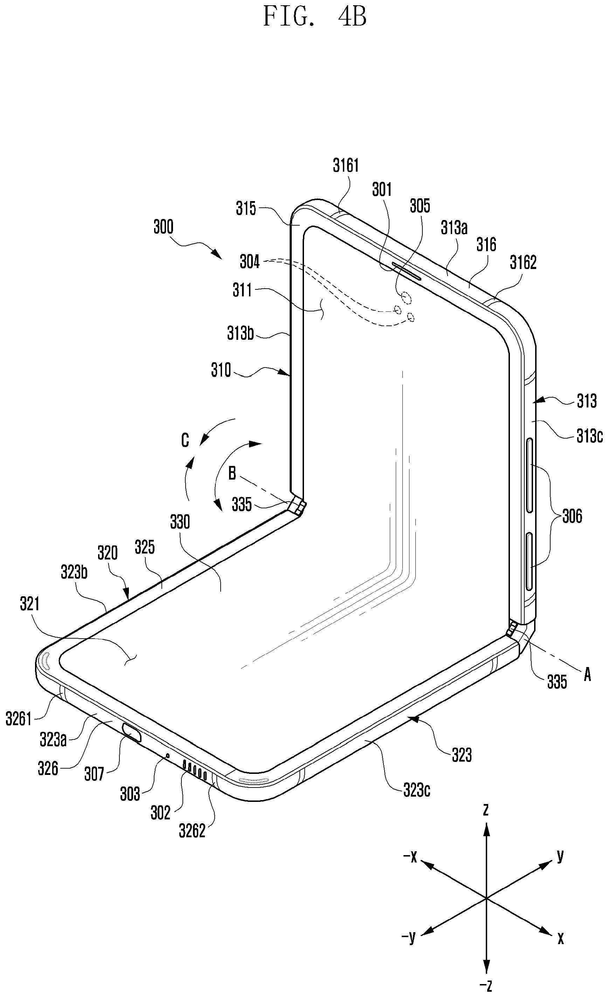

FIG. 3A is a front perspective view of an electronic device in a flat or unfolded state according to certain embodiments of the disclosure. FIG. 3B is a plan view illustrating the front of the electronic device in an unfolded state according to certain embodiments of the disclosure. FIG. 3C is a plan view illustrating the back of the electronic device in an unfolded state according to certain embodiments of the disclosure. FIG. 4A is a perspective view of the electronic device in a folded state according to certain embodiments of the disclosure. FIG. 4B is a perspective view of the electronic device in an intermediate state according to certain embodiments of the disclosure.

With reference to FIGS. 3A to 4B, the electronic device 300 may include a pair of housings 310 and 320 (e.g., foldable housings) that are rotatably coupled as to allow folding relative to a hinge mechanism (e.g., hinge mechanism 340 in FIG. 3B) . In certain embodiments, the hinge mechanism (e.g., hinge mechanism 340 in FIG. 3B) may be disposed in the X-axis direction or in the Y-axis direction. In certain embodiments, two or more hinge mechanisms (e.g., hinge mechanism 340 in FIG. 3B) may be arranged to be folded in a same direction or in different directions. According to an embodiment, the electronic device 300 may include a flexible display 330 (e.g., foldable display) disposed in an area formed by the pair of housings 310 and 320. According to an embodiment, the first housing 310 and the second housing 320 may be disposed on both sides about the folding axis (axis A), and may have a substantially symmetrical shape with respect to the folding axis (axis A). According to an embodiment, the angle or distance between the first housing 310 and the second housing 320 may vary, depending on whether the state of the electronic device 300 is a flat or unfolded state, a folded state, or an intermediate state.

According to certain embodiments, the pair of housings 310 and 320 may include a first housing 310 (e.g., first housing structure) coupled to the hinge mechanism (e.g., hinge mechanism 340 in FIG. 3B), and a second housing 320 (e.g., second housing structure) coupled to the hinge mechanism (e.g., hinge mechanism 340 in FIG. 3B). According to an embodiment, in the unfolded state, the first housing 310 may include a first surface 311 facing a first direction (e.g., front direction) (z-axis direction), and a second surface 312 facing a second direction (e.g., rear direction) (negative z-axis direction) opposite to the first surface 311. According to an embodiment, in the unfolded state, the second housing 320 may include a third surface 321 facing the first direction (z-axis direction), and a fourth surface 322 facing the second direction (negative z-axis direction). According to an embodiment, the electronic device 300 may be operated in such a manner that the first surface 311 of the first housing 310 and the third surface 321 of the second housing 320 face substantially the same first direction (z-axis direction) in the unfolded state, and the first surface 311 and the third surface 321 face one another in the folded state. According to an embodiment, the electronic device 300 may be operated in such a manner that the second surface 312 of the first housing 310 and the fourth surface 322 of the second housing 320 face substantially the same second direction (negative z-axis direction) in the unfolded state, and the second surface 312 and the fourth surface 322 face one another in opposite directions in the folded state. For example, in the folded state, the second surface 312 may face the first direction (z-axis direction), and the fourth surface 322 may face the second direction (negative z-axis direction).

According to certain embodiments, the first housing 310 may include a first side member 313 that at least partially forms an external appearance of the electronic device 300, and a first rear cover 314 coupled to the first side member 313 that forms at least a portion of the second surface 312 of the electronic device 300. According to an embodiment, the first side member 313 may include a first side surface 313a, a second side surface 313b extending from one end of the first side surface 313a, and a third side surface 313c extending from the other end of the first side surface 313a. According to an embodiment, the first side member 313 may be formed in a rectangular shape (e.g., square or rectangle) through the first side surface 313a, second side surface 313b, and third side surface 313c.

According to certain embodiments, the second housing 320 may include a second side member 323 that at least partially forms the external appearance of the electronic device 300, and a second rear cover 324 coupled to the second side member 323, forming at least a portion of the fourth surface 322 of the electronic device 300. According to an embodiment, the second side member 323 may include a fourth side surface 323a, a fifth side surface 323b extending from one end of the fourth side surface 323a, and a sixth side surface 323c extending from the other end of the fourth side surface 323a. According to an embodiment, the second side member 323 may be formed in a rectangular shape through the fourth side surface 323a, fifth side surface 323b, and sixth side surface 323c.

According to certain embodiments, the pair of housings 310 and 320 are not limited to the shape and combinations illustrated herein, and may be implemented with a combination of other shapes or parts. For example, in certain embodiments, the first side member 313 may be integrally formed with the first rear cover 314, and the second side member 323 may be integrally formed with the second rear cover 324.

According to certain embodiments, in the unfolded state of the electronic device 300, the second side surface 313b of the first side member 313 and the fifth side surface 323b of the second side member 323 may be connected without a gap formed therebetween. According to an embodiment, in the unfolded state of the electronic device 300, the third side surface 313c of the first side member 313 and the sixth side surface 323c of the second side member 323 may be connected without a gap formed therebetween. According to an embodiment, in the unfolded state, the electronic device 300 may be configured such that the combined length of the second side surface 313b and the fifth side surface 323b is longer than the combined length of the first side surface 313a and/or the fourth side surface 323a. In addition, the combined length of the third side surface 313c and the sixth side surface 323c may be configured to be longer than the length of the first side surface 313a and/or the fourth side surface 323a.

According to certain embodiments, the first side member 313 and/or the second side member 323 may be formed of a metal, and may further include a polymer injected into the metal. According to an embodiment, the first side member 313 and/or the second side member 323 may include at least one conductive portion 316 and/or 326 electrically segmented through one or more segmenting portions 3161 and 3162 and/or segmenting 3261 and 3262, which may be formed using a polymer. In this case, the at least one conductive portion may be electrically connected to a wireless communication circuit included in the electronic device 300, and may be used as an antenna operating in at least one designated band (e.g., about 330MHz ~ about 6GHz).

According to certain embodiments, the first rear cover 314 and/or the second rear cover 324 may be formed of, for example, coated or tinted glass, ceramic, polymer, metal (e.g., aluminum, stainless steel or "STS", or magnesium), or a combination thereof.

According to certain embodiments, the flexible display 330 may be disposed to extend from the first surface 311 of the first housing 310 across the hinge mechanism (e.g., hinge mechanism 340 in FIG. 3B) to at least a portion of the third surface 321 of the second housing 320. For example, the flexible display 330 may include a first region 330a substantially corresponding to the first surface 311, a second region 330b corresponding to the second surface 312, and a third region 330c (e.g., the bendable region) connecting the first region 330a and the second region 330b and corresponding to the hinge mechanism (e.g., hinge mechanism 340 in FIG. 3B). According to an embodiment, the electronic device 300 may include a first protection cover 315 (e.g., first protection frame or first decoration member) coupled along the periphery of the first housing 310. According to an embodiment, the electronic device 300 may include a second protection cover 325 (e.g., second protection frame or second decoration member) coupled along the periphery of the second housing 320. According to an embodiment, the first protection cover 315 and/or the second protection cover 325 may be formed of a metal or polymer material. According to an embodiment, the first protection cover 315 and/or the second protection cover 325 may be used as a decorative member. According to an embodiment, the flexible display 330 may be positioned such that the periphery of the first region 330a is interposed between the first housing 310 and the first protection cover 315. According to an embodiment, the flexible display 330 may be positioned such that the periphery of the second region 330b is interposed between the second housing 320 and the second protection cover 325. According to an embodiment, the flexible display 330 may be positioned such that the periphery of the flexible display 330 corresponding to a protection cap 335 is protected through the protection cap disposed in a region corresponding to the hinge mechanism (e.g., hinge mechanism 340 in FIG. 3B). Consequently, the periphery of the flexible display 330 may be substantially protected from the outside. According to an embodiment, the electronic device 300 may include a hinge housing 341 (e.g., hinge cover) that is disposed so as to support the hinge mechanism (e.g., hinge mechanism 340 in FIG. 3B). The hinge housing 341 may further be exposed to the outside when the electronic device 300 is in the folded state, and be invisible as viewed from the outside when retracted into a first space (e.g., internal space of the first housing 310 ) and a second space (e.g., internal space of the second housing 320) when the electronic device 300 is in the unfolded state. In certain embodiments, the flexible display 330 may be disposed to extend from at least a portion of the second surface 312 to at least a portion of the fourth surface 322. In this case, the electronic device 300 may be folded so that the flexible display 330 is exposed to the outside (out-folding scheme).

According to certain embodiments, the electronic device 300 may include a sub-display 331 disposed separately from the flexible display 330. According to an embodiment, the sub-display 331 may be disposed to be at least partially exposed on the second surface 312 of the first housing 310, and may display status information of the electronic device 300 in place of the display function of the flexible display 330 in case of the folded state. According to an embodiment, the sub-display 331 may be disposed to be visible from the outside through at least some region of the first rear cover 314. In certain embodiments, the sub-display 331 may be disposed on the fourth surface 322 of the second housing 320. In this case, the sub-display 331 may be disposed to be visible from the outside through at least some region of the second rear cover 324.

According to certain embodiments, the electronic device 300 may include at least one of an input device 303 (e.g., microphone), sound output devices 301 and 302, a sensor module 304, camera devices 305 and 308, a key input device 306, or a connector port 307. In the illustrated embodiment, the input device 303 (e.g., microphone), sound output devices 301 and 302, sensor module 304, camera devices 305 and 308, key input device 306, and connector port 307 indicate a hole or shape formed in the first housing 310 or the second housing 320, but may be defined to include a substantial electronic component (e.g., input device, sound output device, sensor module, or camera device) that is disposed inside the electronic device 300 and operated through a hole or a shape.

According to certain embodiments, the input device 303 may include at least one microphone disposed on the second housing 320. In certain embodiments, the input device 303 may include a plurality of microphones disposed to detect the direction of a sound. In certain embodiments, a plurality of microphones may be disposed at appropriate positions in the first housing 310 and/or the second housing 320. According to an embodiment, the sound output devices 301 and 302 may include speakers. According to an embodiment, the input device 303 may include a receiver for calls disposed in the first housing 310, and a speaker disposed in the second housing 320. In certain embodiments, the input device 303, the sound output devices 301 and 302, and the connector port 307 may be disposed in a space arranged in the first housing 310 and/or the second housing 320 of the electronic device 300, and may be exposed to the external environment through at least one hole formed in the first housing 310 and/or the second housing 320. According to an embodiment, at least one connector port 307 may be used to transmit and receive power and/or data to and from an external electronic device. In certain embodiments, at least one connector port (e.g., ear jack hole) may accommodate a connector (e.g., ear jack) for transmitting and receiving an audio signal to and from an external electronic device. In certain embodiments, the hole formed in the first housing 310 and/or the second housing 320 may be commonly used for the input device 303 and the sound output devices 301 and 302. In certain embodiments, the sound output devices 301 and 302 may include a speaker (e.g., piezo speaker) that operates without using a hole formed in the first housing 310 and/or the second housing 320.

According to certain embodiments, the sensor module 304 may generate an electrical signal or data value corresponding to an internal operating state of the electronic device 300 or an external environmental state. The sensor module 304 may detect an external environment, for example, through the first surface 311 of the first housing 310. In certain embodiments, the electronic device 300 may further include at least one sensor module disposed to detect an external environment through the second surface 312 of the first housing 310. According to an embodiment, the sensor module 304 (e.g., illuminance sensor) may be disposed under the flexible display 330 to detect an external environment through the flexible display 330. According to an embodiment, the sensor module 304 may include at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, an illuminance sensor, a proximity sensor, a biometric sensor, an ultrasonic sensor, or an illuminance sensor 304.

According to certain embodiments, the camera devices 305 and 308 may include a first camera device 305 (e.g., front camera device) disposed on the first surface 311 of the first housing 310, and a second camera device 308 disposed on the second surface 312 of the first housing 310. The electronic device 300 may further include a flash 309 disposed close to the second camera device 308. According to an embodiment, the camera device 305 or 308 may include one or more lenses, an image sensor, and/or an image signal processor. The flash 309 may include, for example, a light emitting diode or a xenon lamp. According to an embodiment, the camera devices 305 and 308 may be arranged so that two or more lenses (e.g., wide-angle lens, super-wide-angle lens, or telephoto lens) and image sensors are positioned on one surface (e.g., first surface 311, second surface 312, third surface 321, or fourth surface 322) of the electronic device 300. In certain embodiments, the camera devices 305 and 308 may include time-of-flight (TOF) lenses and/or an image sensor.

According to certain embodiments, the key input device 306 (e.g., key button) may be disposed on the third side surface 313c of the first side member 313 of the first housing 310. In certain embodiments, the key input device 306 may be disposed on at least one of the other side surfaces 313a and 313b of the first housing 310 and/or the side surfaces 323a, 323b and 323c of the second housing 320. In certain embodiments, the electronic device 300 may not include some or all of the key input devices 306, and those not included key input devices 306 may be implemented in other forms, such as soft keys, on the flexible display 330. In certain embodiments, the key input device 306 may be implemented by using a pressure sensor included in the flexible display 330.

According to certain embodiments, some of the camera devices 305 and 308 (e.g., first camera device 305) or the sensor module 304 may be disposed to be exposed through the flexible display 330. For example, the first camera device 305 or the sensor module 304 may be arranged in the internal space of the electronic device 300 so as to be in contact with the external environment through an opening (e.g., through hole) formed at least partially in the flexible display 330. In another embodiment, some sensor modules 304 may be arranged in the internal space of the electronic device 300 so as to perform their functions without being visually exposed through the flexible display 330. For example, in this case, the opening of a region of the flexible display 330 facing the sensor module may be not needed.

With reference to FIG. 4B, the electronic device 300 may be operated to remain in an intermediate state through the hinge mechanism (e.g., hinge 340 in FIG. 3B). In this case, the electronic device 300 may control the flexible display 330 to display different pieces of content on the display area corresponding to the first surface 311 and the display area corresponding to the third surface 321. According to an embodiment, the electronic device 300 may be operated substantially in an unfolded state (e.g., unfolded state of FIG. 3A) and/or substantially in a folded state (e.g., folded state of FIG. 4A) with respect to a specific inflection angle (e.g., angle between the first housing 310 and the second housing 320 in the intermediate state) through the hinge mechanism (e.g., hinge mechanism 340 in FIG. 3B). For example, when a pressing force is applied in the unfolding direction (B direction) in a state where the electronic device 300 is unfolded at a specific inflection angle, through the hinge mechanism (e.g., hinge mechanism 340 in FIG. 3B), the electronic device 300 may be transitioned to an unfolded state (e.g., unfolded state of FIG. 3A). For example, when a pressing force is applied in the folding direction (C direction) in a state where the electronic device 300 is unfolded at a specific inflection angle, through the hinge mechanism (e.g., hinge mechanism 340 in FIG. 3B), the electronic device 300 may be transitioned to a closed state (e.g., folded state of FIG. 4A). In an embodiment, the electronic device 300 may be operated to remain in an unfolded state at various angles (not shown) through the hinge mechanism (e.g., hinge mechanism 340 in FIG. 3B).

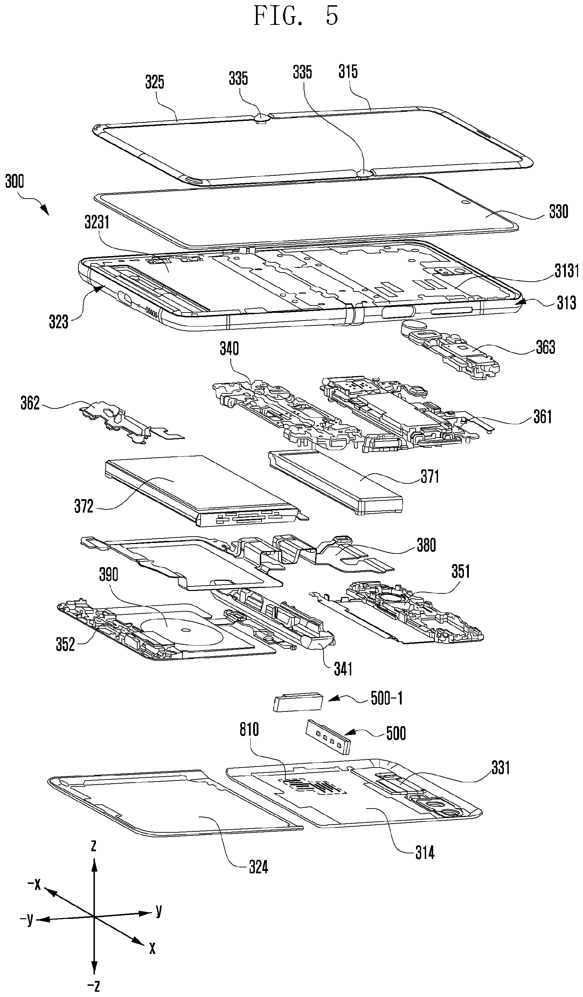

FIG. 5 is an exploded perspective view of the electronic device according to certain embodiments of the disclosure.

With reference to FIG. 5, the electronic device 300 may include a first side member 313 (e.g., first side frame), a second side member 323 (e.g., second side frame), and a hinge mechanism 340 (e.g., hinge module) rotatably connecting the first side member 313 and the second side member 323. According to an embodiment, the electronic device 300 may include a first support member 3131 (e.g., first support member) at least partially extending from the first side member 313, and a second support member 3231 at least partially extending from the second side member 323. According to an embodiment, the first support member 3131 may be integrally formed with the first side member 313 or may be structurally coupled to the first side member 313. Similarly, the second support member 3231 may be integrally formed with the second side member 323 or may be structurally coupled to the second side member 323. According to an embodiment, the electronic device 300 may include a flexible display 330 disposed to be supported by the first support member 3131 and the second support member 3231. According to an embodiment, the electronic device 300 may include a first rear cover 314 that is coupled to the first side member 313 and provides a first space between itself and the first support member 3131, and a second rear cover 324 that is coupled to the second side member 323 and provides a second space between itself and the second support member 3231. In certain embodiments, the first side member 313 and the first rear cover 314 may be integrally formed. In certain embodiments, the second side member 323 and the second rear cover 324 may be integrally formed. According to an embodiment, the electronic device 300 may include a first housing 310 (e.g., first housing 310 in FIG. 3A) (e.g., first housing structure) provided through the first side member 313, the first support member 3131, and the first rear cover 314. According to an embodiment, the electronic device 300 may include a second housing (e.g., second housing 320 in FIG. 3A) (e.g., second housing structure) provided through the second side member 323, the second support member 3231, and the second rear cover 324. According to an embodiment, the electronic device 300 may include a sub-display 331 that is disposed to be visible from the outside through at least some region of the first rear cover 314.

According to certain embodiments, the electronic device 300 may include a first substrate assembly 361 (e.g., main printed circuit board), a camera assembly 363, a first battery 371, or a first bracket 351, arranged in the first space between the first side member 313 and the first rear cover 314. According to an embodiment, the camera assembly 363 may include a plurality of camera devices (e.g., camera devices 305 and 308 in FIGS. 3A and 2A), and may be electrically connected to the first substrate assembly 361. According to an embodiment, the first bracket 351 may provide a support structure for supporting the first substrate assembly 361 and/or the camera assembly 363, and improved rigidity. According to an embodiment, the electronic device 300 may include a second board assembly 362 (e.g., sub printed circuit board), an antenna 390 (e.g., coil member), a second battery 372, or a second bracket 352, arranged in the second space between the second side member 323 and the second rear cover 324. According to an embodiment, the electronic device 300 may include a wiring member 380 (e.g., FPCB) extending from the first substrate assembly 361 across the hinge mechanism 340 to a plurality of electronic components arranged between the second side member 323 and the second rear cover 324, to provide electrical connections therebetween. According to an embodiment, the antenna 390 may include a near field communication (NFC) antenna, a wireless charging antenna, and/or a magnetic secure transmission (MST) antenna. The antenna 390 may, for example, perform short-range communication with an external device or wirelessly transmit and receive power utilized for charging.

According to certain embodiments, the electronic device 300 may include a hinge housing 341 (e.g., hinge cover) that supports the hinge mechanism 340 and is disposed so as to be exposed to the outside when the electronic device 300 is in the folded state (e.g., folded state of FIG. 4A) and be invisible from the outside by being retracted into the first space and/or the second space when the electronic device 300 is in the unfolded state (e.g., unfolded state of FIG. 3A).

According to certain embodiments, the electronic device 300 may include a first protection cover 315 coupled along the periphery of the first side member 313. According to an embodiment, the electronic device 300 may include a second protection cover 325 coupled along the periphery of the second side member 323. According to an embodiment, in the flexible display 330, the periphery of a first flat portion (e.g., first flat portion 330a in FIG. 3B) may be protected by the first protection cover 315. According to an embodiment, in the flexible display 330, the periphery of a second flat portion (e.g., second flat portion 330b in FIG. 3B) may be protected by the second protection cover 325. According to an embodiment, the electronic device 300 may include a protection cap 335 that protects the periphery of the third region (e.g., third region 330c in FIG. 3B) of the flexible display 330 corresponding to the hinge mechanism 340.

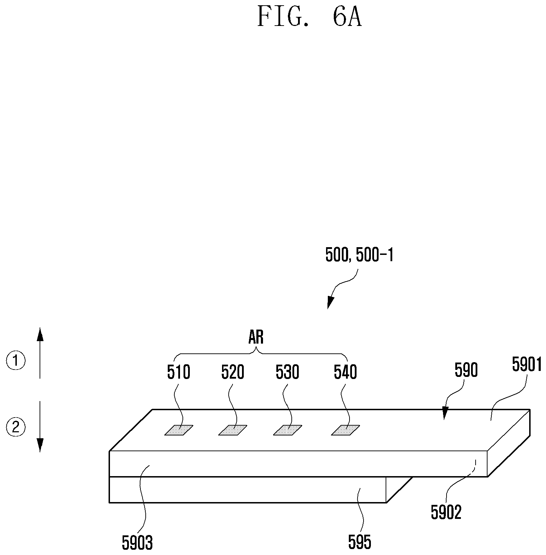

In connection with describing exemplary embodiments of the disclosure hereinafter, "vertical disposition" may refer to a disposition structure in which a first substrate surface (for example, first substrate surface 5901 in FIG. 6A) of a substrate (for example, substrate 590 in FIG. 6A) of an antenna structure 500, 500-1 is disposed to face a side member 313 (or side surface) of a first housing 310, and "horizontal disposition" may refer to a disposition structure in which a first substrate surface (for example, first substrate surface 5901 in FIG. 6A) of a substrate (for example, substrate 590 in FIG. 6A) of an antenna structure 500, 500-1 is disposed to face a first rear cover 314.

According to various embodiments, an electronic device 300 may include an antenna structure 500 (for example, antenna or antenna module), i.e., a first antenna structure, disposed between a first support member 3131 and a first rear cover 314. In some embodiments, the electronic device 300 may further include at least one antenna structure 500-1 (i.e., a second antenna structure) disposed between the first support member 3131 and the first rear cover 314, similarly to the antenna structure 500. In an embodiment, the at least one antenna structure 500-1 may have substantially the same structure as the antenna structure 500. In some embodiments, the at least one antenna structure 500-1 may have a different configuration from the antenna structure 500. According to an embodiment, the antenna structure 500 may be disposed to form a directional signal (for example, beam pattern, signals or directional beam) (for example, first directional signal) in a direction (for example, -z axis direction) in which the first rear cover 314 faces, by changing the shape of the first support member 3131 that supports the antenna structure 500. According to an embodiment, the first rear cover 314 may be formed in a dielectric material. According to an embodiment, the at least one antenna structure 500-1 may be configured to form a directional signal(for example, beam pattern, signals or directional beam) (for example, second directional signal) in an outward direction (for example, -x axis direction) in which the first side member 313 faces, through at least a part of the first side member 313. For example, the antenna structure 500 may include an array antenna (for example, array antenna AR in FIG. 6A) including a plurality of antenna elements (for example, antenna elements, 510, 520, 530, 540 in FIG. 6A) disposed on a substrate (for example, substrate 590 in FIG. 6A). In this case, the antenna structure 500 is configured to form a directional signal in a direction in which a first substrate surface (for example, first substrate surface 5901 in FIG. 6A) faces, and the direction of the directional signal is determined according to the disposition structure of the substrate 590 disposed in the inner space of the first housing 310.

According to exemplary embodiments of the disclosure, even when disposed vertically to occupy a relatively smaller space than when disposed horizontally, the antenna structure 500 may form a directional signal at a comparable level, in substantially the same direction as when disposed horizontally, thereby providing advantages in connection with disposing/designing the same with peripheral electronic components and ensuring beam coverage. In some embodiments, the antenna structure 500 may be disposed between a second support member 3231 and a second rear cover 324, or disposed both between the first side member 3131 and the first rear cover 314 and between the second side member 3231 and the second rear cover 324.

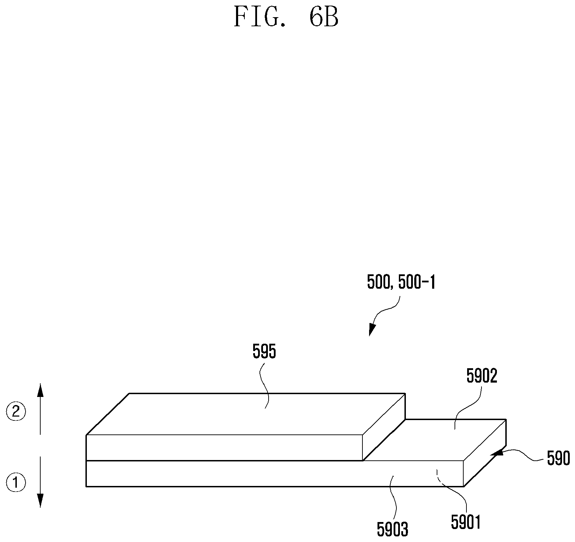

FIG. 6A is a front perspective view of an antenna structure according to various embodiments of the disclosure. FIG. 6B is a rear perspective view of an antenna structure according to various embodiments of the disclosure.

The antenna structure 500 and/or the at least one antenna structure 500-1 in FIG. 6A may be at least partially similar to the antenna structure 500 in FIG. 5, or may further include other embodiments of the antenna structure.

Referring to FIG. 6A and FIG. 6B, the antenna structure 500 (hereinafter, "500") (for example, antenna or antenna module) includes a substrate 590 (for example, printed circuit board) and a plurality of antenna elements 510, 520, 530, 540 disposed on the substrate 590 as an antenna array AR. According to an embodiment, the substrate 590 includes a first substrate surface 5901 facing in a first direction (for example, direction ①), a second substrate surface 5902 facing in a second direction(for example, direction ②) opposite to the first direction , and a substrate side surface 5903 surrounding the space between the first substrate surface 5901 and the second substrate surface 5902. According to an embodiment, the plurality of antenna elements 510, 520, 530, 540 may be disposed to be exposed to the first substrate surface 5901, or disposed between the first substrate surface 5901 and the second substrate surface 5902 and positioned close to the first substrate surface 5901, and may form a directional signal (for example, beam pattern) in the direction (for example, direction ①) in which the first substrate surface 5901 faces. According to an embodiment, the plurality of antenna elements 510, 520, 530, 540 may include multiple conductive patches and/or multiple conductive patterns disposed on the substrate 590. According to an embodiment, the antenna structure 500-1 may have substantially the same configuration as the antenna structure 500.

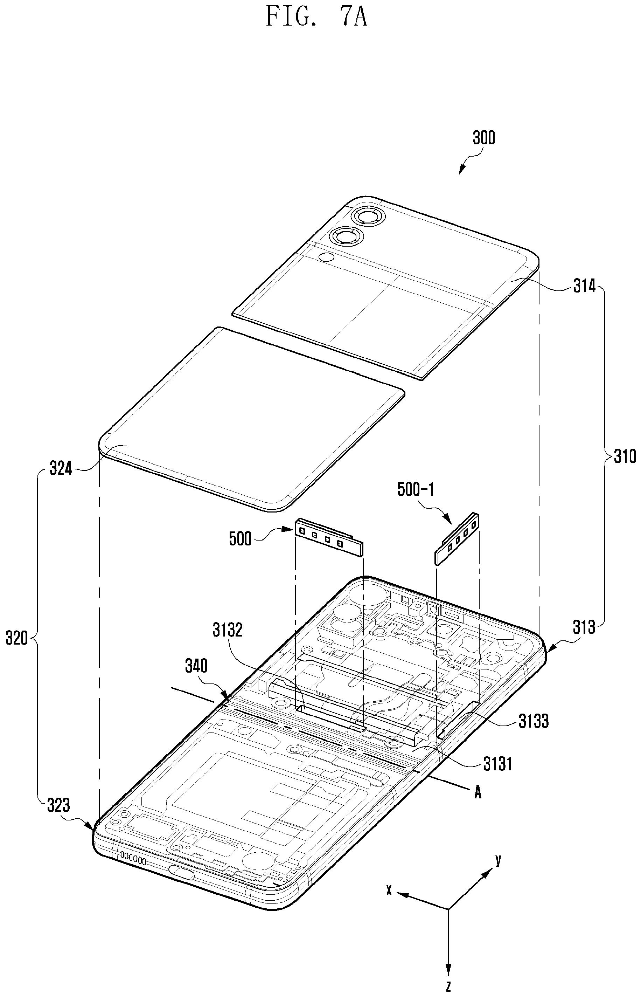

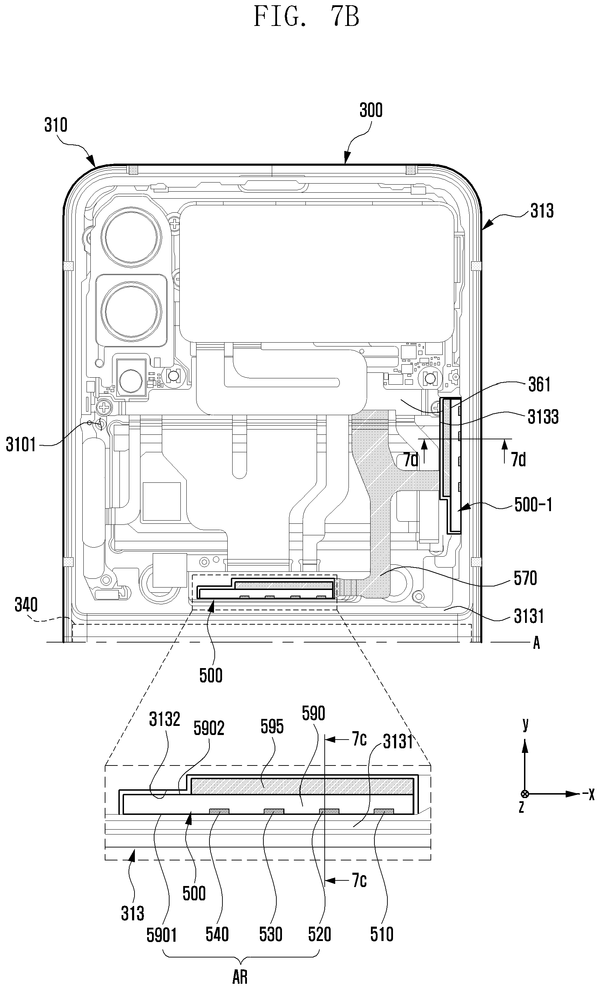

According to various embodiments, the antenna structure 500 may include a wireless communication circuit 595 disposed on the second substrate surface 5902 of the substrate 590 and electrically connected to the plurality of antenna elements 510, 520, 530, 540. According to an embodiment, the wireless communication circuit 595 may be configured to transmit or receive radio signals in a frequency band corresponding to a range of about 3GHz - 300GHz through the array antenna AR. In some embodiments, the wireless communication circuit 595 may be disposed on a substrate (for example, first substrate 361 in FIG. 7A) positioned to be spaced part from the substrate 590, in the inner space (for example, inner space 3101 in FIG. 7B) of the electronic device (for example, electronic device 300 in FIG. 7B), and may be electrically connected to the substrate 590 through an electrical connection member (for example, electrical connection member 570 in FIG. 7B) (for example, flexible RF cable (FRC)).

According to various embodiments, the wireless communication circuit 595 electrically connected to the plurality of antenna elements 510, 520, 530, 540 may include an RFIC (for example, RFIC 222, 224, 226, and/or 228 in FIG. 2). For example, the plurality of antenna elements 510, 520, 530, 540 may be disposed on one surface (for example, first substrate surface 5901) of the substrate 590 or embedded in a position close to one surface, and the RFIC (for example, RFIC 222, 224, 226, and/or 228 in FIG. 2) may be disposed on another surface (for example, second substrate surface 5902) of the substrate 590.

According to various embodiments, the plurality of antenna elements 510, 520, 530, 540 may include a first antenna element 510, a second antenna element 520, a third antenna element 530, and a fourth antenna element 540 disposed to be spaced apart by a designated interval. According to an embodiment, the plurality of antenna elements 510, 520, 530, 540 may be disposed in a row. In some embodiment, the plurality of antenna elements 510, 520, 530, 540 may be disposed to have a matrix form (for example, 2xw matrix form). According to an embodiment, the plurality of antenna elements 510, 520, 530, 540 may have substantially the same shape. In some embodiments, the antenna structure 500 may include an array antenna AR including four antenna elements 510, 520, 530, 540, but is not limited thereto. For example, the antenna structure 500 may include one antenna element, and may include two, three, or at least five antenna elements as an antenna array AR. In some embodiments, the antenna structure 500 may include multiple conductive patterns (for example, dipole antenna) additionally disposed on the substrate 590. In some embodiments, the multiple conductive patterns (for example, dipole antenna) may be disposed on the same insulating layer of the substrate 590 including multiple insulating layers (for example, dielectric layers) as the plurality of antenna elements 510, 520, 530, 540, or on a different insulating layer. In some embodiments, the multiple conductive patterns (for example, dipole antenna) may be disposed in an area not overlapping the plurality of antenna elements 510, 520, 530, 540 when seen from above the first substrate surface 5901. In this case, no ground layer may be disposed in the corresponding area of the substrate 590 in which the multiple conductive patterns are disposed. In some embodiments, the multiple conductive patterns (for example, dipole antenna) may disposed inside the substrate 590, and the plurality of antenna elements 510, 520, 530, 540 may be disposed to be exposed to the outer surface (for example, first substrate surface 5901) of the substrate 590. In this case, the conductive patterns may be disposed to form a direction signal in a different direction (for example, vertical direction) from the direction of a directional signal formed by the array antenna AR.

According to various embodiments, the antenna structure 500 may include at least one feeder disposed on the plurality of antenna elements 510, 520, 530, 540, respectively. According to an embodiment, the array antenna AR may operate as a single-polarized antenna or a dual-polarized antenna through the at least one feeder.

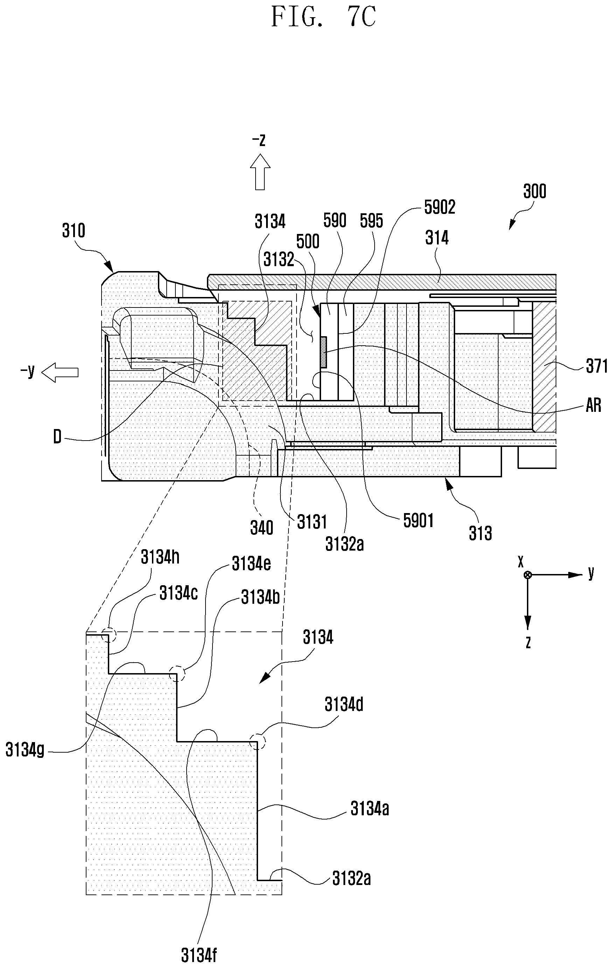

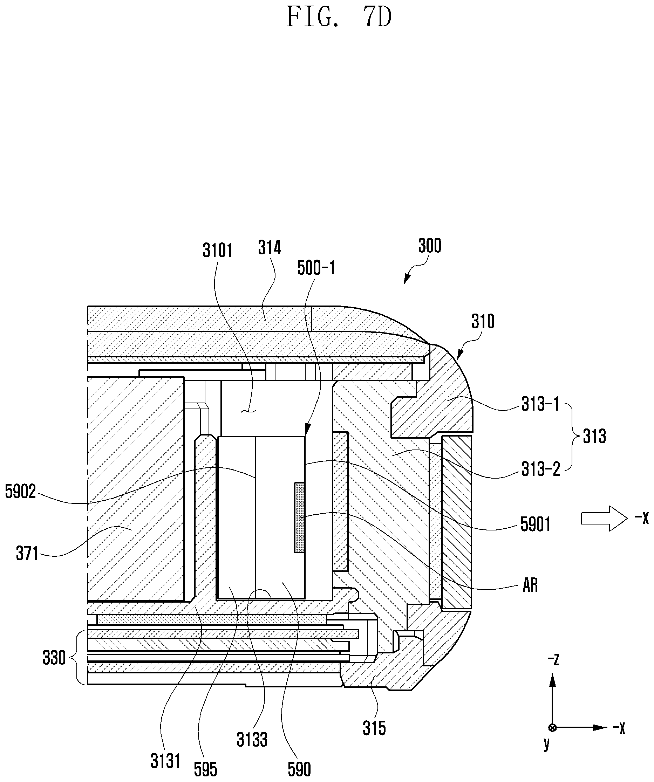

FIG. 7A is a partially exploded perspective view of an electronic device having antenna structures disposed thereon according to various embodiments of the disclosure. FIG. 7B illustrates a partial configuration of an electronic device, seen from behind, having an antenna structure disposed thereon according to various embodiments of the disclosure. FIG. 7C is a partial sectional view of an electronic device, taken along line 7c-7c in FIG. 7B, according to various embodiments of the disclosure. FIG. 7D is a partial sectional view of an electronic device, taken along line 7d-7d in FIG. 7B, according to various embodiments of the disclosure.

Referring to FIG. 7A and 7B, the electronic device 300 may include a first housing 310 and a second housing 320 connected to be able to be folded with regard to each other, with reference to a folding axis A, through a hinge structure 340. According to an embodiment, the first housing 310 may include a first side member 313 forming at least a part of the exterior of the electronic device 300, and a first rear cover 314 coupled to the first side member 313. According to an embodiment, the second housing 320 may include a second side member 323 forming at least a part of the exterior of the electronic device 300, and a second rear cover 324 coupled to the second side member 323.

According to various embodiments, the electronic device 300 may include a first support member 3131 extending at least partially from the first side member 313 to the inner space 3103. According to an embodiment, the first support member 3131 may be formed integrally with the first side member 313, or formed separately and coupled structurally. According to an embodiment, the first support member 3131 may be at least partially formed of a conductive member. According to an embodiment, the first support member 3131 may include a conducive member (for example, metal) and a nonconductive member (for example, polymer or dielectric material) coupled to the conductive member.

The electronic device 300 includes an antenna structure 500. According to an embodiment, the antenna structure 500 may be disposed near the hinge structure 340, between the first support member 3131 and the first rear cover 314. According to an embodiment, the antenna structure 500 may be fixed so as to be seated on a first mounting portion 3132 (for example, first recess) formed in a corresponding position by the first support member 3131 at least partially formed of a conductive member. According to an embodiment, the antenna structure 500-1 may be disposed so as to be seated in a second mounting portion 3133 (for example, second recess) formed in a corresponding position by the first support member 3131. In some embodiments, the antenna structure 500 and/or the antenna structure 500-1 may be fixed by attaching them to a metallic antenna support bracket (not illustrated) and fastening the antenna support bracket to the first mounting portion 3132 and the second mounting portion 3133 through fastening members (for example, screws).

According to various embodiments, the antenna structure 500 may be fixed to the first mounting portion 3132 of the first support member such that the first substrate surface (for example, first substrate surface 5901 in FIG. 6A) faces a direction (for example, -y axis direction) perpendicular to the rear cover 314 (vertical disposition). According to an embodiment, the antenna structure 500 may be electrically connected to the first substrate 361 (for example, first substrate assembly 361 in FIG. 5) disposed in the inner space 3101 of the first housing 310 through the electrical connection member 570. According to an embodiment, the antenna structure 500 may be vertically disposed such that the first substrate surface 5901 faces the hinge structure 340. According to an embodiment, the antenna structure 500-1 may be vertically disposed on the electronic device 300 and may be disposed such that the first substrate surface 5901 faces in the outward direction (for example, -x axis direction) in which the side member 313 faces. According to an embodiment, the antenna structure 500 may be configured such that a directional signal is formed substantially in the direction (for example, -z axis direction) in which the rear cover 314 faces through diffraction and/or reflection of the directional signal according to the shape of at least a part of a corresponding surface (for example, corresponding surface 3134 in FIG. 7C) of the first support member 3131 corresponding to the first substrate surface 5901. According to an embodiment, the antenna structure 500-1 may be configured such that a directional signal is formed in the outward direction (for example, -x axis direction) in which the side member 313 faces. In some embodiments, the antenna structure 500 may be disposed such that the first substrate surface 5901 faces in a direction (for example, y axis direction) opposite to the hinge structure 340 or faces in directions (for example, x axis direction and/or -x axis direction) perpendicular to the hinge structure 340.

According to exemplary embodiments of the disclosure, the antenna structure 500 is vertically disposed while forming a directional signal in the same direction as compared to when a horizontal disposition is used such that efficient disposition design is possible in view of peripheral electronic components (for example, hinge structure, substrate, or battery), and may help secure more excellent beam coverage. In particular, beam coverage may be improved when providing the antenna structure 500 together with the antenna structure 500-1.

Referring to FIG. 7C, the antenna structure 500 may be disposed so as to be at least partially seated on the first mounting portion 3132 formed on the first support member 3131. In this case, the first substrate surface 5901 may be disposed in a direction (for example, in -y axis direction) such that the same faces the hinge structure 340. According to an embodiment, the first support member 3131 may include a corresponding surface as a conductive structure which is made of a conductive member (for example, conductive member 313-1 in FIG. 7D), and which corresponds to the first substrate surface 5901. According to an embodiment, the corresponding surface 3134 may be formed as a stepped portion (step shape) which is stepped so as to be more distant from the first substrate surface 5901 as the same extends from the bottom surface 3132a of the first mounting portion 3132 in the upward direction (for example, -z axis direction, toward the rear cover 314) and to provide improved beam coverage due do the combination of reflection and diffraction at the stepped profile.

According to an embodiment, the corresponding surface 3134 may be formed in a shape such that a directional signal (for example, beam pattern, signals or directional beam) formed from the antenna structure 500 is reflected and/or diffracted in a designated direction. According to an embodiment, the corresponding surface 3134 may include a first reflection portion 3134a extending from the bottom surface of the first mounting portion 3132 in a perpendicular direction (for example, -z axis direction, direction in which the rear cover 314 faces) and a first planar portion 3134f extending from the first reflection portion 3134a in a direction (for example, -y axis direction) parallel to the bottom surface. According to a further embodiment, in addition to the above, a second reflection portion 3134b extends from the first planar portion 3134f in a perpendicular direction (for example, -z axis direction) to be parallel to the first reflection portion 3134a. According to a further embodiment, in addition to the above a second planar portion 3134g may extend form the second reflection portion 3134b in a perpendicular direction (for example, -y axis direction) to be parallel to the first planar portion 3134f, and a third reflection portion 3134c may extend from the second planar portion 3134g in a perpendicular direction (for example, -z axis direction) to be parallel to the second reflection portion 3134b. According to an embodiment, the corresponding surface 3134 may include a first diffraction portion 3134d which is a boundary area (for example, first corner area) between the first reflection portion 3134a and the first planar portion 3134f, a second diffraction portion 3134e which is a boundary area (for example, second corner area) between the second reflection portion 3134b and the second planar portion 3134g, and a third diffraction portion 3134h formed on an end of the third reflection portion 3134c. Therefore, even when the antenna structure 500 is vertically disposed, a directional signal may be formed from the antenna structure 500 in a direction (for example, -z axis direction) perpendicular to the direction (for example, -y axis direction) in which the first substrate surface 5901 faces, by being reflected and/or diffracted through the reflection portions 3134a, 3134b, 3134c and the diffraction portions 3134d, 3134e, 3134h of the corresponding surface 3134. In some embodiments, the first, second, and/or third reflection portions 3134a, 3134b, 3134c may be formed to slope at a designated angle with regard to the bottom surface 3132a of the first mounting portion 3132. In some embodiments, the first and/or second planar portions 3134f, 3134g may also be formed to slope with regard to the bottom surface of the first mounting portion 3132. For example, the direction in which a directional signal formed from the antenna structure 500 is radiated may be configured, through the shape of the corresponding surface 3134, to be neither the -y axis direction in which the first substrate surface 5901 faces nor the -z axis direction perpendicular to the -y axis direction in which the first substrate surface 5901 faces, but to be a designated direction between the -y axis direction and the -z axis direction, for example. According to an embodiment, the conductive structure may comprise a first portion including the reflection portions 3134a, 3134b, 3134c and/or the planar portions 3134f, 3134g and a second portion including the diffraction portions 3134d, 3134e, 3134h.

According to various embodiments, the corresponding surface 3134 (for example, conductive structure) of the first support member 3131 made of a conductive member may be advantageous a structure for covering at least a part of the first substrate surface 5901 by a designated amount of overlapping D (for example, amount of covering), when the first side member 313 is seen from outside (for example, when viewed in the first direction). According to an embodiment, the corresponding surface 3134 (for example, conductive structure) of the first support member 3131 may be formed to have an amount of overlapping such that the same overlaps the substrate 590 by at least 50%, when the first side member 313 is seen from outside. In some embodiments, the corresponding surface 3134 (for example, conductive structure) of the first support member 3131 may be formed to have an amount of overlapping such that the same overlaps the substrate 590 by 100%, when the first side member 313 is seen from outside. In some embodiments, the corresponding surface 3134 of the first support member 3131 may be formed to have an amount of overlapping such that the same overlaps the array antenna AR (for example, a plurality of antenna elements (for example, a plurality of antenna elements 510, 520, 530, 540 in FIG. 6A)) by about 50% or more, when the first substrate surface 5901 is seen from outside (for example, when seen in y axis direction). In some embodiments, the corresponding surface 3134 of the first support member 3131 may be formed to have an amount of overlapping such that the same overlaps the array antenna AR (for example, a plurality of antenna elements (for example, a plurality of antenna elements 510, 520, 530, 540 in FIG. 6A)) by 100%, when the first substrate surface 5901 is seen from outside (for example, when seen in y axis direction). In some embodiments, at least a part of the corresponding surface may be structured to be coupled to a nonconductive member (for example, nonconductive member 313b in FIG. 7B) (for example, dielectric material).

In some embodiments, the corresponding surface 3134 of the first support member 3131 may be replaced with a conductive electric structure disposed in the inner space 3101 of the electronic device 300. For example, the conductive electric structure may include at least one of a conductive hinge structure (for example, hinge structure 340 in FIG. 5), a battery (for example, battery 371 in FIG. 5), various electric elements, and/or a conductive shield can.

Referring to FIG. 7D, the antenna structure 500-1 may be disposed so as to be at least partially seated on the second seating portion 3133 formed on the first support member 3131. In this case, the first substrate surface 5901 may be disposed so as to face the side member 313. According to an embodiment, the side member 313 may include a conductive member 313-1 and a nonconductive member 313-2 coupled to the conductive member 313-1 in an injection type. According to an embodiment, the antenna structure 500-1 may be disposed such that the first substrate surface 5901 faces the side member 313. Therefore, a directional signal formed from the antenna structure 500-1 may be configured such that a directional signal is formed to a side surface (for example, second side surface 313b in FIG. 3) of the electronic device 300 through the nonconductive member 313-2 of the side member 313.

According to exemplary embodiments of the disclosure, the antenna structure 500 may be configured to form a directional signal in the direction (for example, -z axis direction) in which the first rear cover 314 of the electronic device 300 faces. In this case, the substrate 590 of the antenna structure 500 is vertically disposed while forming a directional signal in substantially the same direction as horizontal disposition, thereby assisting efficient disposition design in view of peripheral electronic components (for example, hinge structure, substrate, or battery). In addition, if a death grip is generated by the user's grasping, and if the radiation performance of the antenna structure 500-1 is degraded, radio signals may be transmitted or received through the antenna structure 500, thereby securing antenna coverage.

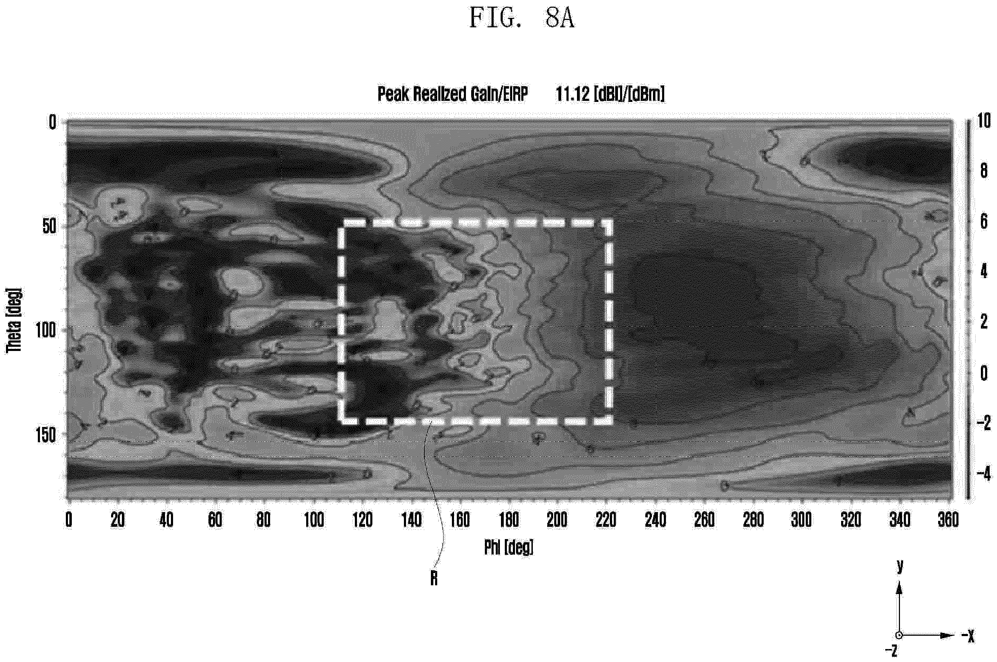

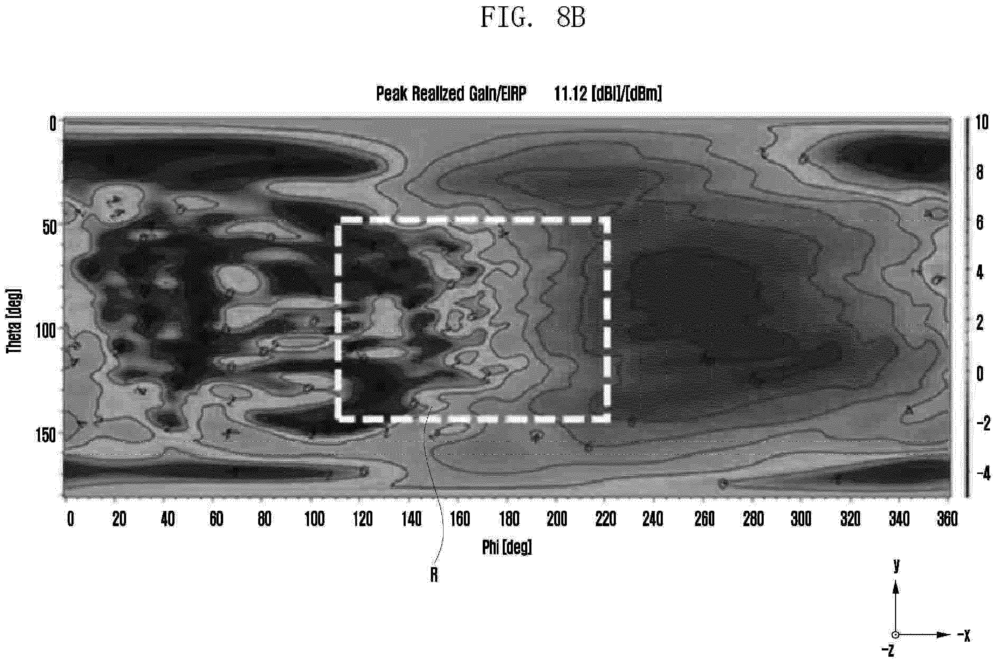

FIG. 8A and FIG. 8B illustrate a comparison of radiation performance in n261 band (about 28GHz band) according to whether or not a vertically disposed antenna structure exists, according to various embodiments of the disclosure (heat map).

As in the comparative example illustrated in FIG. 8A, in which no antenna structure 500 exists, no radiation occurs in the corresponding area R of the first rear cover 314. However, it is clear from FIG. 8B in which an antenna structure 500 according to the disclosure is disposed vertically that radiation occurs in a designated frequency band (for example, n261 band), in the direction (for example, -z axis direction) in which the first rear cover 314 faces, in the corresponding area R of the first rear cover 314. For example, even if the substrate 590 of the antenna structure 500 is disposed vertically, a directional signal may be formed in a direction different from the direction in which the first substrate surface 5901 faces, by changing the shape of the corresponding surface 3134 of the first support member 3131, and this may mean that, compared with horizontal disposition, efficient disposition design of the antenna structure may be assisted.

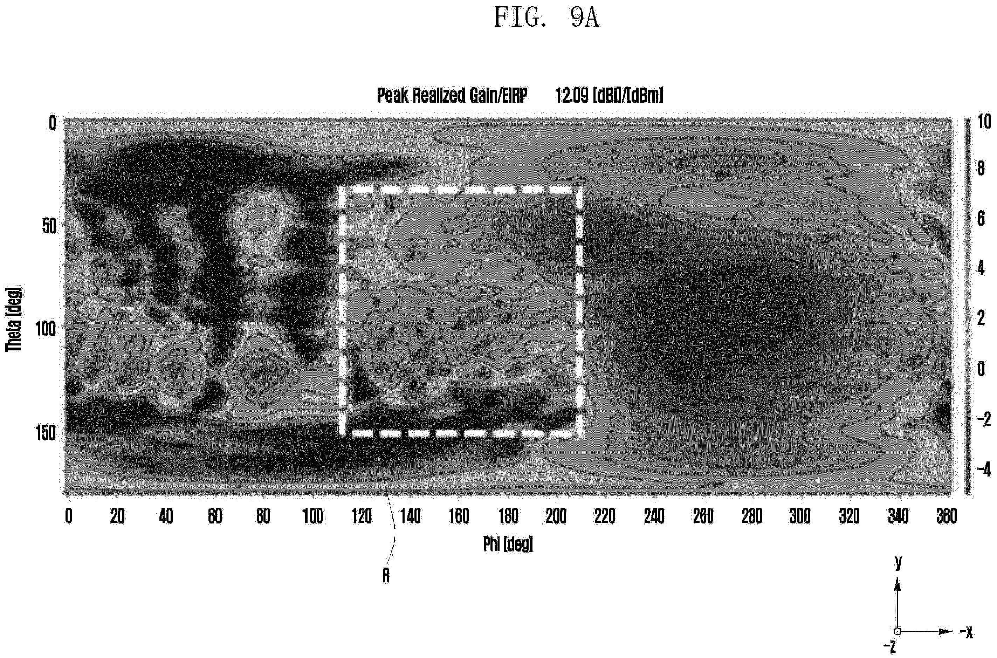

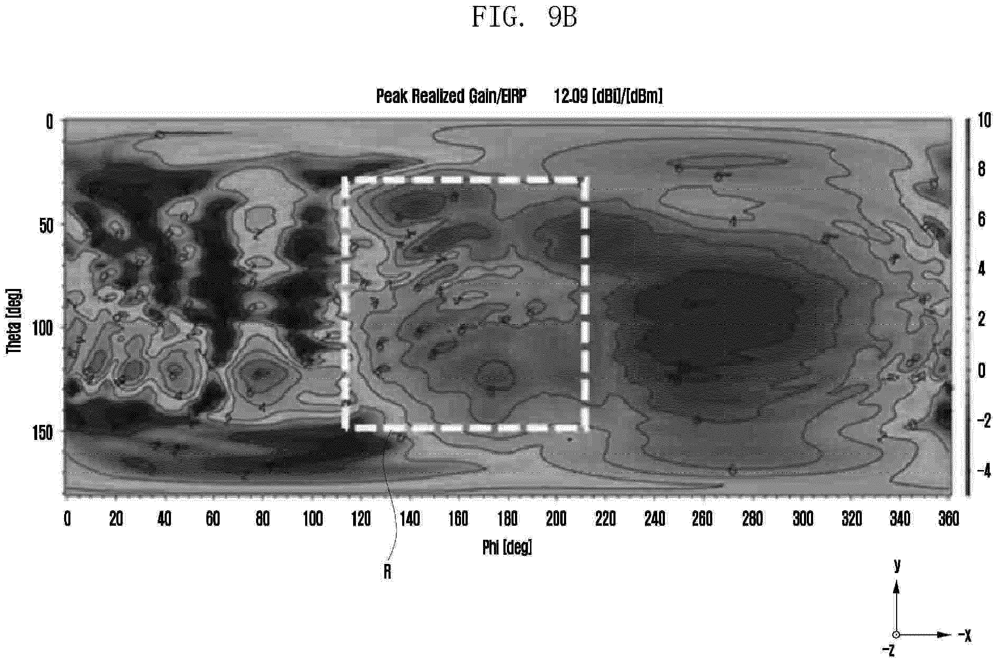

FIG. 9A and FIG. 9B illustrate a comparison of radiation performance in n260 band (about 39GHz band) according to whether or not a vertically disposed antenna structure exists, according to various embodiments of the disclosure (heat map).

As in the comparative example illustrated in FIG. 9A, in which no antenna structure 500 exists, no radiation occurs in the corresponding area R of the first rear cover 314. However, it is clear from FIG. 9B in which an antenna structure 500 according to the disclosure is disposed vertically that radiation occurs in a designated frequency band (for example, n260 band), in the direction (for example, -z axis direction) in which the first rear cover 314 faces, in the corresponding area R of the first rear cover 314. For example, even if the substrate 590 of the antenna structure 500 is disposed vertically, a directional signal may be formed in a direction different from the direction in which the first substrate surface 5901 faces, by changing the shape of the corresponding surface 3134 of the first support member 3131, and this may mean that, compared with horizontal disposition, efficient disposition design of the antenna structure may be assisted.

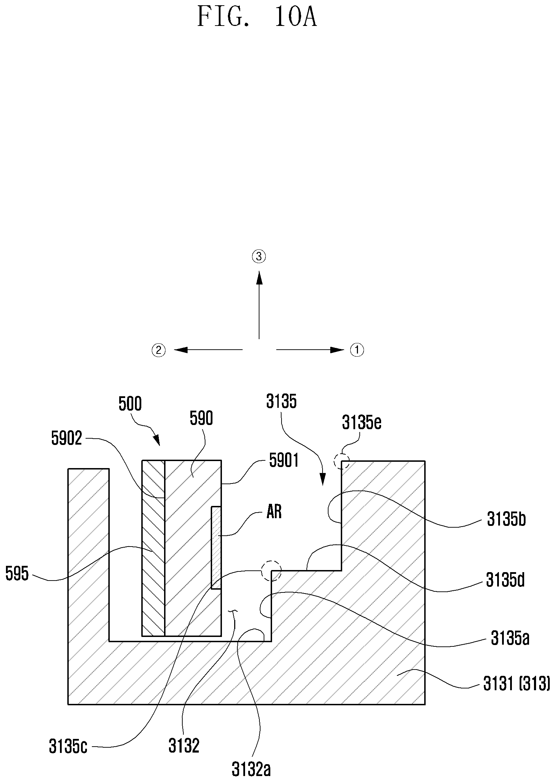

FIG. 10A to FIG. 10F illustrate various shapes of a corresponding surface of a first support member according to various embodiments of the disclosure.

Although FIG. 10A to FIG. 10F schematically illustrate the shape of corresponding surfaces 3135, 3136, 3137, 3138, 3139, 3140 of a support member 3131 corresponding to an antenna structure 500 (for example, antenna structure 500 in FIG. 7C), at least one of the corresponding surfaces 3135, 3136, 3137, 3138, 3139, 3140 can be replaced with the corresponding surface 3134 in FIG. 7C.

Referring to FIG. 10A, an electronic device (for example, electronic device 300 in FIG. 7C) may include a side member 313 used as a part of a housing (for example, housing 310 in FIG. 7C) and a first support member 3131 which extends from or is coupled to the side member 313, and which has a mounting portion 3132 (for example, first mounting portion 3132 in FIG. 7C) formed to support at least a part of an antenna structure 500 (for example, antenna structure 500 in FIG. 7C). According to an embodiment, the antenna structure 500 may include a substrate 590 including a first substrate surface 5901 facing in a first direction (for example, direction ①) and a second substrate surface 5902 facing in a second direction (for example, direction ②) opposite to the first direction (for example, direction ①), and an array antenna AR disposed such that a directional signal is formed in the direction in which the first substrate surface 5901 of the substrate 590 faces. According to an embodiment, the first support member 3131 may include a corresponding surface 3135 disposed to at least partially correspond to the first substrate surface 5901 of the substrate 590 of the antenna structure 500.

According to various embodiments, the corresponding surface 3135 may include a first reflection portion 3135a extending from the bottom surface 3132a of the mounting portion 3132 in a third direction (for example, direction ③) perpendicular thereto, a planar portion 3135d extending from the first reflection portion 3135a in a direction (for example, direction①) parallel to the bottom surface, and a second reflection portion 3135b extending from the planar portion 3135d in the third direction (for example, direction ③) to be parallel to the first reflection portion 3135a. According to an embodiment, the corresponding surface 3135 may include a first diffraction portion 3135c which is a boundary area (for example, corner area) between the first reflection portion 3135a and the planar portion 3135d, and a second diffraction portion 3135e formed on an end of the second reflection portion 3135b. Therefore, a directional signal may be formed from the antenna structure 500 may be reflected through the first and second reflection portions 3135a, 3135b and diffracted through the first and second diffraction portions 3135c, 3135e, thereby being formed in the third direction (for example, direction ③) perpendicular to the first direction (for example, direction ①) in which the first substrate surface 5901 faces. In some embodiments, the directional signal may be formed from the antenna structure 500 may be formed in a direction between the first direction (for example, direction ①) and the third direction (for example, direction ③).

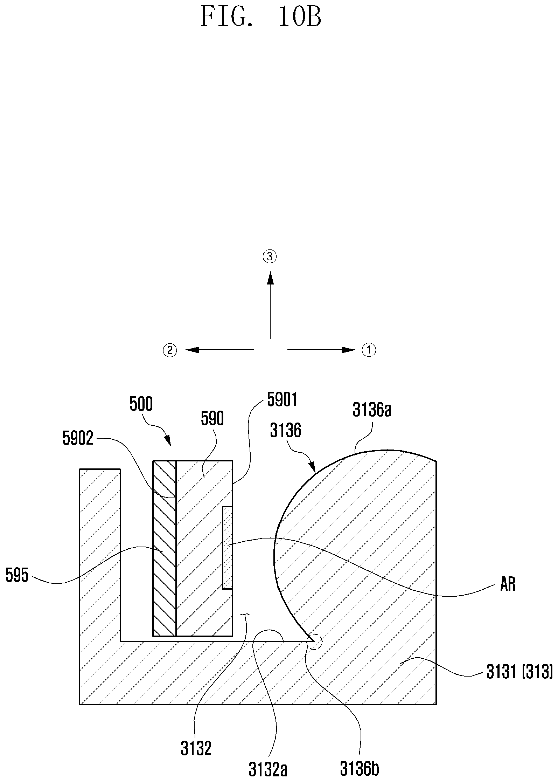

In the following description of components illustrated in FIG. 10B to FIG. 10F, identical components are given identical reference numerals, and detailed descriptions may be omitted herein.

Referring to FIG. 10B, the corresponding surface 3136 of the first support member 3131 corresponding to the first substrate surface 5901 of the substrate 590 of the antenna structure 500 may include a curved portion 3136a protruding in the second direction (for example, direction ②) and a diffraction portion 3136b formed in a boundary area between the bottom surface 3132a of the first mounting portion 3132 and the curved portion 3136a.

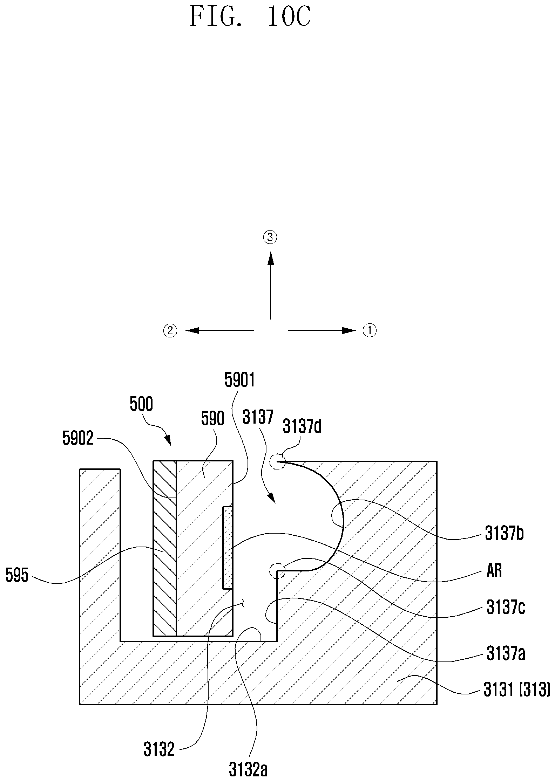

Referring to FIG. 10C, the corresponding surface 3137 of the first support member 3131 corresponding to the first substrate surface 5901 of the substrate 590 of the antenna structure 500 may be formed to include a reflection portion 3137a extending in a perpendicular direction (for example, direction ③) from the bottom surface 3132a of the mounting portion 3132, and a concave reflection portion 3137b which extends from the reflection portion 3137a, and which is recessed to a designated depth in the first direction (for example, direction ①). In an embodiment, the corresponding surface 3137 may include a first diffraction portion 3137c formed in the boundary area between the reflection portion 3137a and the concave reflection portion 3137b, and a second diffraction portion 3137d formed on an end of the concave reflection portion 3137b.

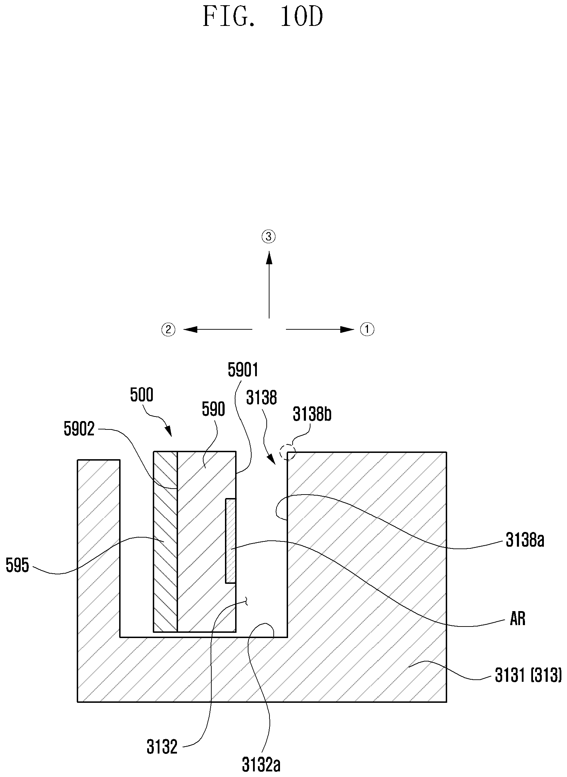

Referring to FIG. 10D, the corresponding surface 3138 of the first support member 3131 corresponding to the first substrate surface 5901 of the substrate 590 of the antenna structure 500 may be formed to include a straight portion 3138a extending in a perpendicular direction (for example, direction ③) from the bottom surface of the mounting portion 3132, and a diffraction portion 3138b formed on an end of the straight portion.

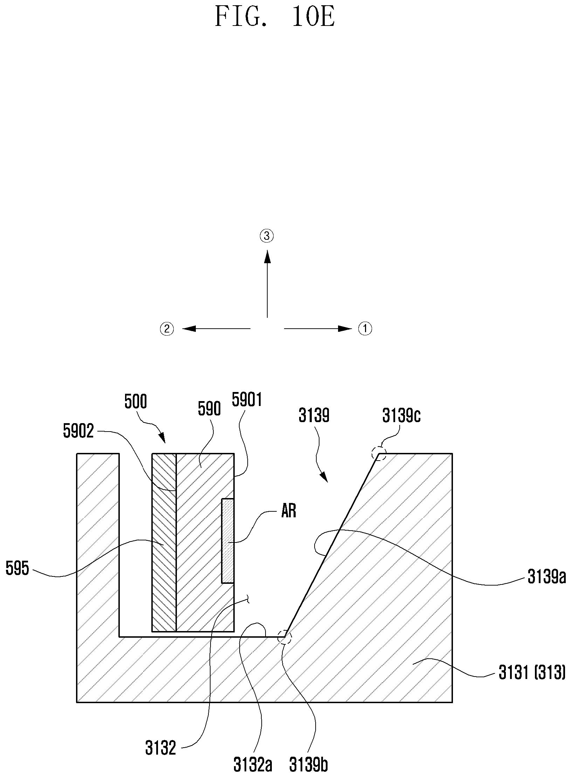

Referring to FIG. 10E, the corresponding surface 3139 of the first support member 3131 corresponding to the first substrate surface 5901 of the substrate 590 of the antenna structure 500 may be formed to include a tapered reflection portion 3139a (for example, sloping portion) gradually spaced apart from the substrate 590 as the same faces in first direction (for example, direction ①) from the bottom surface 3132a of the mounting portion 3132, a first diffraction portion 3139b formed in the boundary area between the bottom surface 3132a and the reflection portion 3139a, and a second diffraction portion 3139c formed on an end of the reflection portion 3139a.

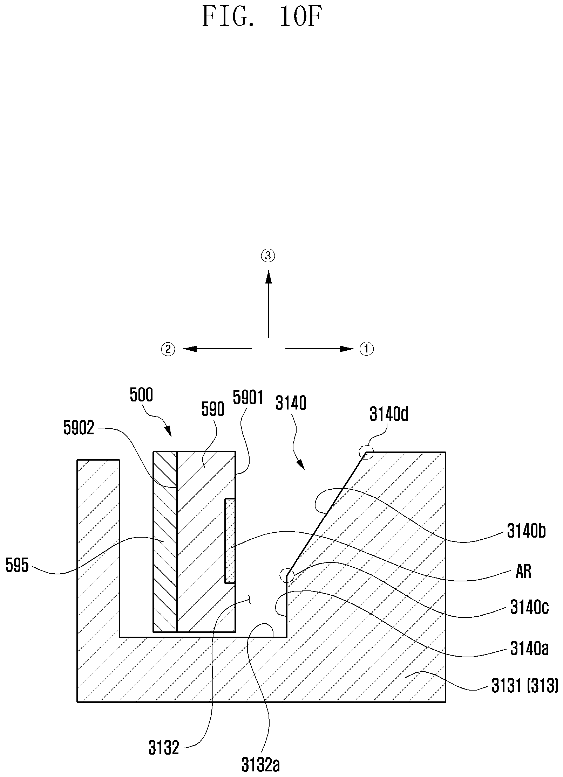

Referring to FIG. 10F, the corresponding surface 3140 of the first support member 3131 corresponding to the first substrate surface 5901 of the substrate 590 of the antenna structure 500 may be formed to include a first reflection portion 3140a (for example, straight portion) extending from the bottom surface 3132a of the mounting portion 3132 in a third direction (for example, direction ③) perpendicular thereto, a tapered second reflection portion 3140b (for example, second sloping portion) gradually spaced apart from the substrate 590 as the same faces in first direction (for example, direction ①) from the first reflection portion 3140a, a first diffraction portion 3140c formed in the boundary area between the first reflection portion 3140a and the second reflection portion 3140b, and a second diffraction portion 3140d formed on an end of the second reflection portion 3140d.

The directional signal formed in the direction in which the first substrate surface 5901 of the antenna structure 500 faces, according to exemplary embodiments of the disclosure, may be configured in various directions by using reflection and/or diffraction through a change in the shape of the illustrated corresponding surface, or formed by applying various schemes, though not illustrated.

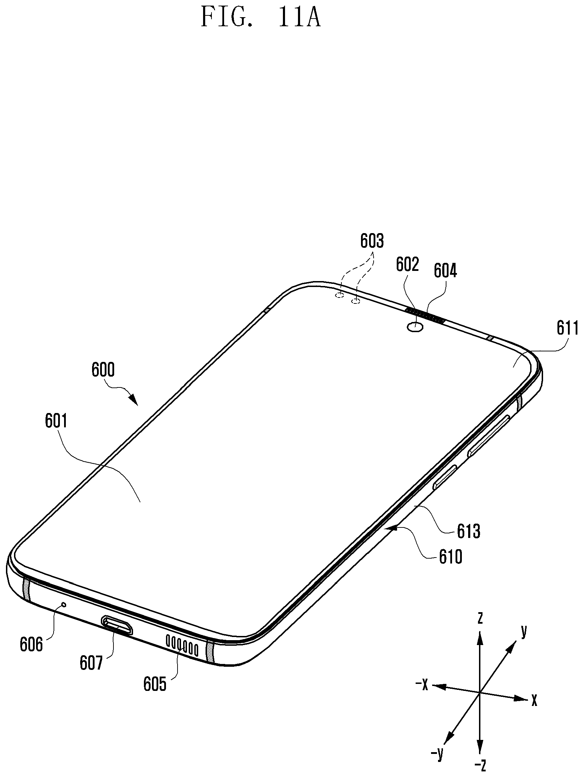

FIG. 11A to FIG. 14 illustrate electronic devices according to various embodiments of the disclosure, which have antenna structures disposed thereon.

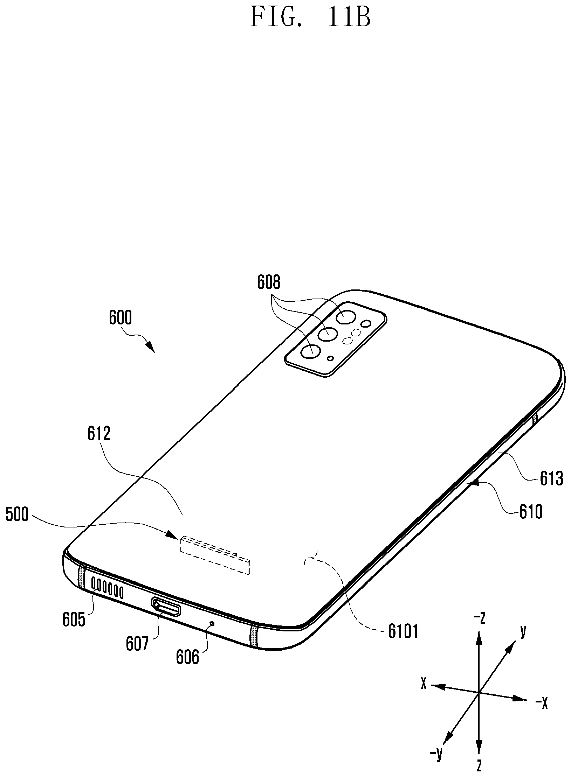

Referring to FIG. 11A and FIG. 11B, the electronic device 600 may include a bar-type electronic device. According to an embodiment, the electronic device 600 may include a housing 610 (for example, housing structure) including a front cover 611 facing in a first direction (for example, z axis direction), a rear cover 612 facing in the opposite direction (for example, -z axis direction) to the front cover 611, and a side member 613 disposed to surround the inner space 6101 between the front cover 611 and the rear cover 612. According to an embodiment, the electronic device 600 may include a display 601 disposed in the inner space 6101 to be visible from the outside through at least a part of the front cover 611. According to an embodiment, the electronic device 600 may include at least one camera device 602 and at least one sensor module 603, which are disposed in the inner space 6101 so as to detect external environments through at least a part of the front cover 611 and/or at least a part of the display 601. According to an embodiment, the electronic device 600 may include at least one speaker device 604, 605, a microphone device 606, and an interface connector port 607, which are disposed to operate through at least a part of the side member 613. According to an embodiment, the at least one speaker device 604, 605 may include a receiver 604 disposed between the side member 613 and the front cover 611, and an external speaker device 605 disposed to operate through the side member 613. According to an embodiment, the electronic device 600 may include at least one different camera device 608 disposed to detect external environments through at least a part of the rear cover 612.

According to various embodiments, the electronic device 600 may include at least one antenna structure 500 (for example, at least one antenna structure 500 in FIG. 7C) disposed in the inner space 6101. The antenna structure 500 may have substantially the same configuration as the antenna structure 500 in FIG. 6A. For example, the antenna structure 500 may be vertically disposed in the inner space 6101 of the electronic device 600 such that the first substrate surface (for example, first substrate surface 5901 in FIG. 6A) of the substrate (for example, substrate 590 in FIG. 6A) faces the side member 613. In this case, the antenna structure 500 may be configured such that a directional signal is formed in the direction (for example, -z axis direction) in which the rear cover 612 faces, perpendicular to the first substrate surface 5901, through the above-mentioned corresponding surfaces (for example, at least one corresponding surface among the corresponding surface 3134 in FIG. 7C or the corresponding surfaces 3135, 313, 3137, 3138, 3139, 3140 in FIG. 10A to FIG. 10F) disposed to correspond to the first substrate surface 5901 and/or a corresponding surface of an inner conductive electric structure (for example, at least one among a conductive hinge structure (for example, hinge structure 340 in FIG. 5), a battery (for example, battery 371 in FIG. 5), various electric elements, and/or a conductive shield can), thereby having an efficient disposition structure and helping secure antenna beam coverage.

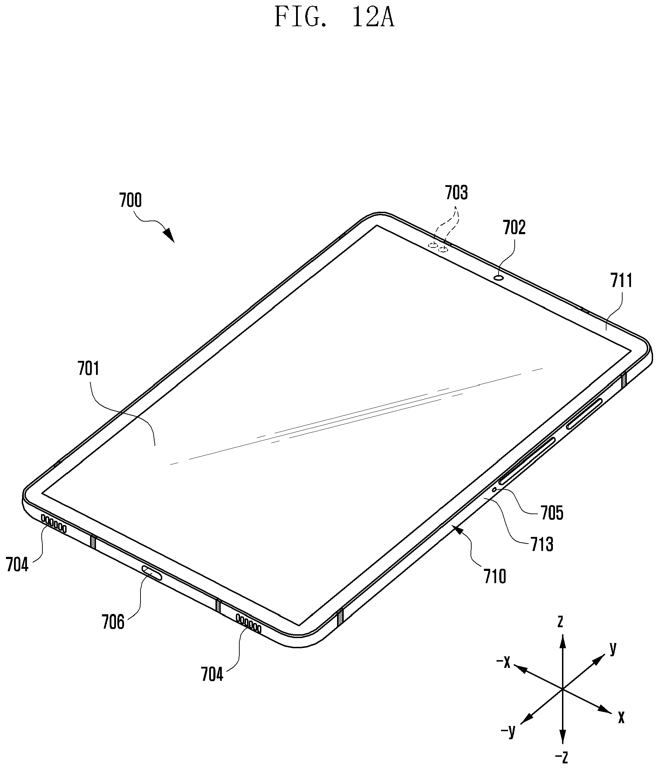

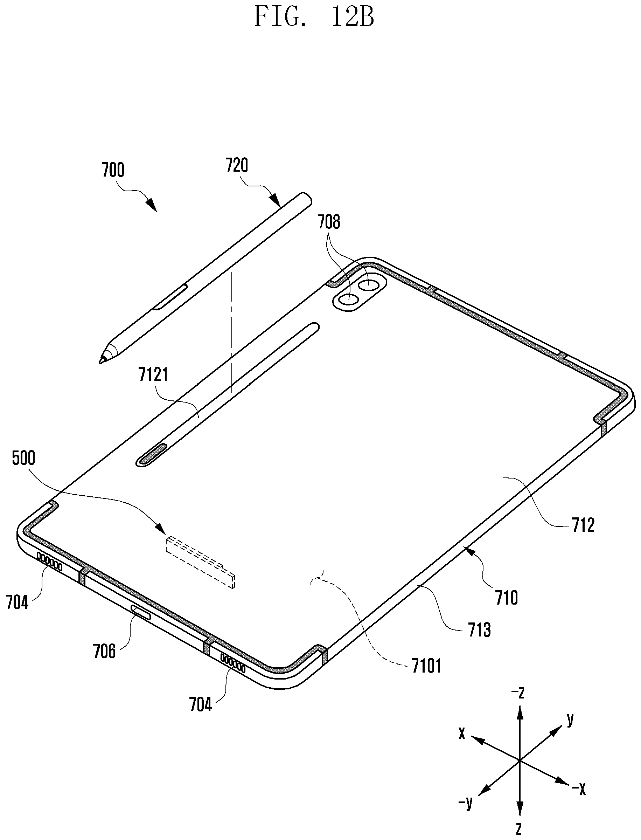

Referring to FIG. 12A and FIG. 12B, the electronic device 700 may include a tablet-type electronic device. According to an embodiment, the electronic device 700 may include a housing 710 (for example, housing structure) including a front cover 711 facing in a first direction (for example, z axis direction), a rear cover 712 facing in the opposite direction (for example, -z axis direction) to the front cover 711, and a side member 713 disposed to surround the inner space 7101 between the front cover 711 and the rear cover 712. According to an embodiment, the electronic device 700 may include a display 701 disposed in the inner space 7101 to be visible from the outside through at least a part of the front cover 711. According to an embodiment, the electronic device 700 may include at least one camera device 702 and at least one sensor module 703, which are disposed in the inner space 7101 so as to operate through at least a part of the front cover 711 and/or at least a part of the display 701. According to an embodiment, the electronic device 700 may include at least one speaker device 704, a microphone device 705, and an interface connector port 706, which are disposed to operate through at least a part of the side member 713. According to an embodiment, the electronic device 700 may include at least one different camera device 708 disposed so as to operate through at least a part of the rear cover 712.According to various embodiments, the electronic device 700 may include an electronic pen 720 (for example, stylus pen) which is detachably disposed on a pen mounting portion 7121 provided on at least a part of the rear cover 712, and which performs an input operation by approaching or contacting the display 701.

According to various embodiments, the electronic device 700 may include at least one antenna structure 500 (for example, at least one antenna structure 500 in FIG. 7C) disposed in the inner space 7101 of the housing 710. The antenna structure 500 may have substantially the same configuration as the antenna structure 500 in FIG. 6A. For example, the antenna structure 500 may be vertically disposed in the inner space 7101 of the electronic device 700 such that the first substrate surface (for example, first substrate surface 5901 in FIG. 6A) of the substrate (for example, substrate 590 in FIG. 6A) faces the side member 713. In this case, the antenna structure 500 may be configured such that a directional signal is formed in the direction (for example, -z axis direction) in which the rear cover 712 faces, perpendicular to the first substrate surface 5901, through the above-mentioned corresponding surfaces (for example, at least one corresponding surface among the corresponding surface 3134 in FIG. 7C or the corresponding surfaces 3135, 313, 3137, 3138, 3139, 3140 in FIG. 10A to FIG. 10F) disposed to correspond to the first substrate surface 5901 and/or a corresponding surface of an inner conductive electric structure (for example, at least one among a conductive hinge structure (for example, hinge structure 340 in FIG. 5), a battery (for example, battery 371 in FIG. 5), various electric elements, and/or a conductive shield can) thereby having an efficient disposition structure and helping secure antenna beam coverage.

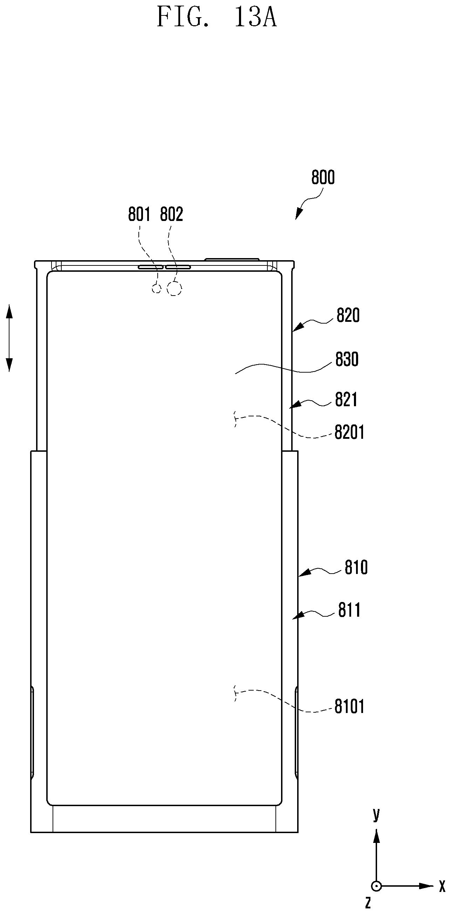

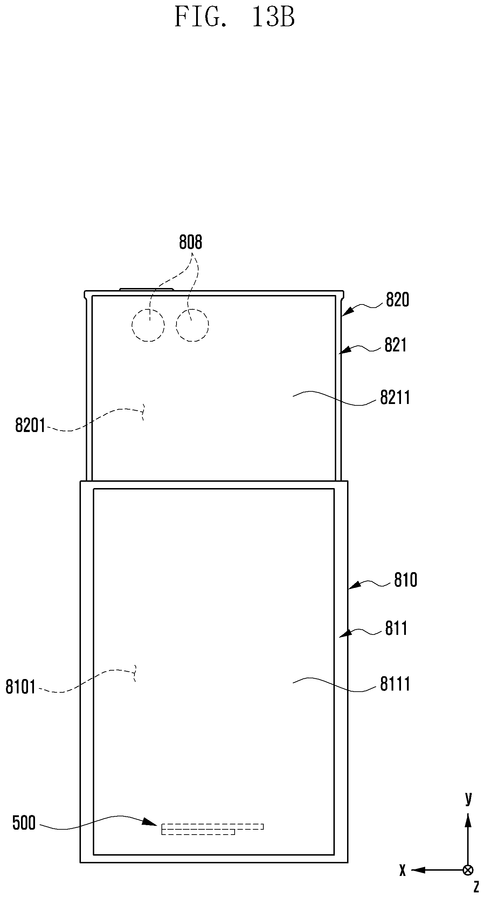

Referring to FIG. 13A and FIG. 13B, the electronic device 800 may include a rollable-type electronic device. According to an embodiment, the electronic device 800 may include a first housing 810, a second housing 820 slidably coupled to the first housing 810, and a flexible display 830 disposed to be supported by the first housing 810 and the second housing 820. According to an embodiment, the first housing 810 may include a first side member 811 and a first rear cover 8111 coupled to the first side member 811. According to an embodiment, the first housing 810 may include a first space 8101 formed through the first side member 811 and the first rear cover 8111. According to an embodiment, the second housing 820 may include a second side member 821 and a second rear cover 8211 coupled to the second side member 821. According to an embodiment, the second housing 820 may include a second space 8201 formed through the second side member 821 and the second rear cover 8211. According to an embodiment, the electronic device 800 may have a first display area as at least a part of the flexible display 830 is received in the first space 8101 and thus is not visible from the outside in a slide-in state. According to an embodiment, the electronic device 800 may have a second display area larger than the first display area as at least a part of the flexible display 830 is drawn out of the first space 8101 and thus is visible from the outside in a slide-out state. According to an embodiment, the electronic device 800 may include at least one camera device 802 and at least one sensor module 803, which are disposed in the second space 8201, and which may operate through at least a part of the flexible display 830. According to an embodiment, the electronic device 800 may include at least one additional camera device 803 which is disposed in the second space 8201, and which may operate through at least a part of the second rear cover 8211 and/or the first rear cover 8111.

According to various embodiments, the electronic device 800 may include at least one antenna structure 500 (for example, at least one antenna structure 500 in FIG. 7C) disposed in the first space 8101 of the housing 810. The antenna structure 500 may have substantially the same configuration as the antenna structure 500 in FIG. 6A. For example, the antenna structure 500 may be vertically disposed in the first space 8101 of the first housing 810 such that the first substrate surface (for example, first substrate surface 5901 in FIG. 6A) of the substrate (for example, substrate 590 in FIG. 6A) faces the first side member 811. In this case, the antenna structure 500 may be configured such that a directional signal is formed in the direction (for example, -z axis direction) in which the first rear cover 8111 faces, perpendicular to the first substrate surface 5901, through the above-mentioned corresponding surfaces (for example, at least one corresponding surface among the corresponding surface 3134 in FIG. 7C or the corresponding surfaces 3135, 313, 3137, 3138, 3139, 3140 in FIG. 10A to FIG. 10F) disposed to correspond to the first substrate surface 5901 and/or a corresponding surface of an inner conductive electric structure (for example, at least one among a conductive hinge structure (for example, hinge structure 340 in FIG. 5), a battery (for example, battery 371 in FIG. 5), various electric elements, and/or a conductive shield can) thereby having an efficient disposition structure and helping secure antenna beam coverage. In some embodiments, at least one antenna structure 500 may be disposed in the second space 8201 of the second housing 820.

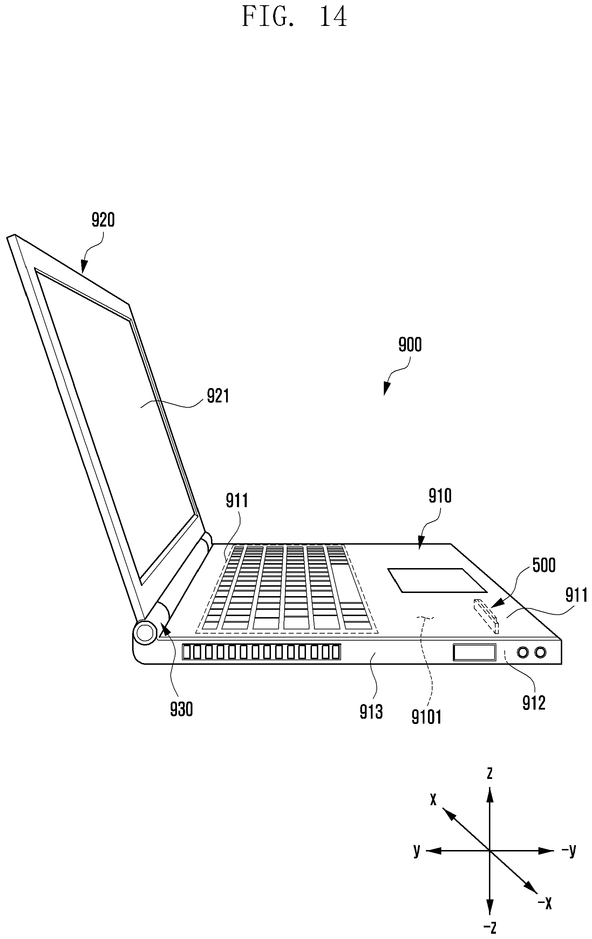

Referring to FIG. 14, the electronic device 900 may include a note book-type electronic device. According to an embodiment, the electronic device 900 may include a first housing 910 and a second housing 920 foldably connected to the first housing 910 through a hinge device 930. According to an embodiment, the electronic device 900 may be cradled on a cradling surface of a cradling structure (for example, desk or table) through at least a part of the first housing 910. According to an embodiment, the second housing 920 may be unfolded in a designated angle range (for example, in the range of about 0° to 360°) with regard to the first housing 910. According to an embodiment, the second housing 920 may be folded so as to face at least a part of the first housing 910.

According to various embodiments, the first housing 910 may include a first plate 911 facing in a first direction (for example, z axis direction), a second plate 912 facing in a second direction (for example, -z axis direction) opposite to the first direction (for example, z axis direction), and a side member 913 surrounding the space 9101 between the first plate 911 and the second plate 912. According to an embodiment, the electronic device 900 may include a key button assembly 940 including multiple key buttons, disposed to be exposed to the outside through the first plate 911, in the first housing 910. According to an embodiment, the electronic device 900 may include a display 921 disposed to be exposed to the outside through at least a part of the second housing 920.

According to various embodiments, the electronic device 900 may include at least one antenna structure 500 (for example, at least one antenna structure 500 in FIG. 7C) disposed in the inner space 9101 of the first housing 910. The antenna structure 500 may have substantially the same configuration as the antenna structure 500 in FIG. 6A. For example, the antenna structure 500 may be vertically disposed in the inner space 9101 of the electronic device 900 such that the first substrate surface (for example, first substrate surface 5901 in FIG. 6A) of the substrate (for example, substrate 590 in FIG. 6A) faces the side member 913. In this case, the antenna structure 500 may be configured such that a directional signal is formed in the direction (for example, -z axis direction) in which the first rear cover 911 faces, perpendicular to the first substrate surface 5901, through the above-mentioned corresponding surfaces (for example, at least one corresponding surface among the corresponding surface 3134 in FIG. 7C or the corresponding surfaces 3135, 313, 3137, 3138, 3139, 3140 in FIG. 10A to FIG. 10F) disposed to correspond to the first substrate surface 5901 and/or a corresponding surface of an inner conductive electric structure (for example, at least one among a conductive hinge structure (for example, hinge structure 340 in FIG. 5), a battery (for example, battery 371 in FIG. 5), various electric elements, and/or a conductive shield can) thereby having an efficient disposition structure and helping secure antenna beam coverage.

According to various embodiments, an electronic device (for example, electronic device 300 in FIG. 7C) includes at least one housing (for example, first housing 310 in FIG. 7C) including a rear cover(for example, rear 314 in FIG. 7C), a conductive structure (for example, first support member 3131 in FIG. 7C) disposed in an inner space (for example, inner space 3101 in FIG. 7B) of the at least one housing, and a first antenna structure (for example, first antenna structure 500 in FIG. 7C) disposed near the conductive structure in the inner space, the first antenna structure including a substrate (for example, substrate 590 in FIG. 7C) including a first substrate surface (for example, first substrate surface 5901 in FIG. 7C) and a second substrate surface (for example, second substrate surface 5902 in FIG. 7C) facing in an opposite direction to the first substrate surface, and a plurality of antenna elements disposed on the substrate. The plurality of antenna elements are configured to transmit signals in an direction toward the conductive structure. The first antenna structure is disposed such that the first substrate surface faces in a first direction so as to face the conductive structure. The conductive structure includes is configured to change direction of the signals transmitted by the plurality of antenna elements to form a beam pattern through the rear cover The antenna structure in combination with the conductive structure may form a directional beam in a different direction as the first direction allowing to save mounting space while ensuring beam coverage due to the conductive structure, thereby providing advantages in connection with disposing/designing the same with peripheral electronic components.

According to various embodiments, the first direction (in which the first substrate surface faces) faces a side member (or side surface) of the at least one housing. In other words, the first direction may be a planar/horizontal direction of the electronic device. Thus, even when disposed vertically to occupy a relatively smaller area space of the electronic device than when disposed horizontally, the antenna structure may form a directional beam at a comparable level in substantially the same direction as when disposed horizontally, thereby providing advantages in connection with disposing/designing the same with peripheral electronic components and ensuring beam coverage.

The first antenna structure is configured to form the signals in a second direction perpendicular to the first direction and/or a direction between the first direction and the second direction. The conductive structure therefore allows a directional beam in the same direction as in the case of a perpendicular disposition such that efficient disposition design may be possible in view of peripheral electronic components while providing excellent beam coverage.

According to various embodiments, the conductive structure may be formed to have an amount of overlapping such that 100% of the substrate is covered, when viewed in the first direction. This ensures that a sufficient beam intensity interacts with the conductive structure to provide the beam coverage in the designated spatial/angular field different from the first direction.

According to various embodiments, the conductive structure may be formed to have an amount of overlapping such that 100% of the plurality antenna elements disposed on the substrate is covered, when viewed in the first direction. This ensures that a sufficient beam intensity interacts with the conductive structure to cover a designated spatial/angular field different from the first direction.

According to various embodiments, the at least one housing may include a front cover facing in an opposite direction to the rear cover, and a side member surrounding the inner space between the front cover and the rear cover and including a conductive support member, and the conductive structure may be formed through the conductive support member.

According to various embodiments, the conductive support member may include a mounting portion such that at least a part of the substrate is mounted thereon, and the conductive structure may be a part of the conductive support member corresponding to the first substrate surface of the substrate mounted on the mounting portion. Thus, internal structures are provided to cover a designated angular/spatial beam field different from the first direction while allowing reduced mounting area.

According to various embodiments, the electronic device may include a display disposed in the inner space to be visible from the outside through at least a part of the front cover, and the first antenna structure is configured to form the first direction signal in a direction in which the rear cover faces. The rear cover may be formed in a dielectric material. Thus, a beam coverage in the direction of the rear cover is provided by an antenna module while requiring reduced mounting area. For example, the substrate of the antenna structure may be vertically disposed while forming a directional beam in substantially the same direction as horizontal disposition, thereby assisting efficient disposition design in view of peripheral electronic components.

According to various embodiments, the electronic device may include a second antenna structure disposed in the inner space so as to have a substantially identical configuration as the first antenna structure, and the second antenna structure may be disposed such that the first substrate surface faces the side member. Thus, if a death grip is generated by the user's grasping, and if the radiation performance of the second antenna structure is degraded, radio signals may still be transmitted or received through the first antenna structure thereby securing antenna coverage.

According to various embodiments, the second antenna structure is configured to form another signals toward the side member in a direction perpendicular to the first direction.

According to various embodiments, the side member may include a conductive member and a nonconductive member coupled to the conductive member, and the second antenna structure is configured to form the another signals to be radiated to the outside through the nonconductive member. Therefore, in combination with the first antenna structure, in case of death grip beam coverage can be still provided by the first antenna structure.

According to various embodiments, the conductive structure may include at least one of a battery, electric elements, and/or a conductive shield can disposed in the inner space.

According to various embodiments, the conductive structure includes a first portion configured to reflect the signals and a second portion configured to diffract the signals and the first portion may include a stepped structure including at least one reflection portion parallel to the first substrate surface and at least one planar portion extending from the at least one reflection portion so as to connect an adjacent reflection portion. This profile allows to cause reflection at different reflection portions acting like a mirror and diffraction at the transitions/edges to cover a designated angular field for beam coverage in particular in perpendicular direction with respect to the facing direction of the first substrate surface. In particular, the stepped portion is useful to cover the angular field in the rear cover/upper direction, in which maximum radiation gain can be achieved by the stepped structure.

According to various embodiments, the second portion may include at least one diffraction portion which is a boundary area between the at least one reflection portion and the at least one planar portion, and the first antenna structure is configured to form the first directional signal through the at least one reflection portion and the least one diffraction portion. The discontinuities at the edges become point sources of electromagnetic beam waves resulting in improved beam coverage.

According to various embodiments, the at least one housing may include a first housing and a second housing connected to the first housing through a hinge structure to be foldable with each other, and the first antenna structure may be disposed near the hinge structure in the inner space of the first housing.

According to various embodiments, the conductive structure may be at least a part of the hinge structure.

According to various embodiments, the at least one housing may include a first housing and a second housing coupled to be able to slide by a designated reciprocating distance from the first housing, and the electronic device may further include a flexible display disposed to be supported through the first housing and the second housing and received in the inner space of the first housing so as to be at least partially invisible from the outside.

According to various embodiments, the first antenna structure may be disposed in the inner space of the first housing such that the directional signal is formed in the opposite direction to the flexible display.

According to various embodiments, the electronic device may include a wireless communication circuit disposed in the inner space and configured to transmit or receive radio signals in a designated frequency band through the at least one antenna element.

According to various embodiments, the wireless communication circuit may be disposed on the second substrate surface of the substrate.

According to various embodiments, the designated frequency band may include a range of 3GHz - 100GHz.

In addition, embodiments of the disclosure disclosed in the specification and the drawings are only specific examples presented to easily describe technical contents according to embodiments of the disclosure and to help understanding of embodiments of the disclosure, and are not intended to limit the scope of embodiments of the disclosure. Therefore, not only embodiments disclosed herein, but also all changed or modified forms derived based on the technical idea of various embodiments of the disclosure are to be interpreted as being included in the scope of various embodiments of the disclosure.

## Claims

1. An electronic device comprising:
at least one housing (310) including a rear cover (314);
a conductive structure (3131) disposed in an inner space (3101) of the at least one housing (310); and
a first antenna structure (500) disposed in the inner space (3101),
wherein the first antenna structure (500) comprises:
a substrate (590) comprising a first substrate surface (5901) and a second substrate surface (5902) facing in an opposite direction to the first substrate surface (5901); and
a plurality of antenna elements (510, 520, 530, 540) disposed on the substrate (590), the plurality of antenna elements configured to transmit signals in a direction towards the conductive structure,
wherein the first antenna structure (500) is disposed such that the first substrate surface (5901) faces in a first direction so as to face the conductive structure (3131), and
wherein the conductive structure (3131) is configured to change direction of the signals transmitted by the plurality of antenna elements to form a beam pattern through the rear cover (314),
**characterized in that**,
the first antenna structure (500) is configured to form the signals in a second direction perpendicular to the first direction and/or a direction between the first direction and the second direction.

2. The electronic device of claim 1, wherein the conductive structure (3131) is formed to have an amount of overlapping (D) such that 100% of the substrate (590) is covered, when viewed in the first direction.

3. The electronic device of one of the claims 1 to 2, wherein the conductive structure(3131) is formed to have an amount of overlapping (D) such that 100% of the plurality of antenna elements (510, 520, 530, 540) disposed on the substrate (590) is covered, when viewed in the first direction.

4. The electronic device of one of the claims 1 to 3, wherein the at least one housing (310) comprises a front cover (315) facing in an opposite direction to the rear cover (314), and a side member (313) surrounding the inner space (3101) between the front cover (315) and the rear cover (314) and comprising a conductive support member (3131), and
wherein the conductive structure is formed through the conductive support member (3131).

5. The electronic device of claim 4, wherein the conductive support member (3131) comprises a mounting portion (3132) such that at least a part of the substrate (590) is mounted thereon, and
wherein the conductive structure is a part of the conductive support member (3131) corresponding to the first substrate surface (5901) of the substrate (590) mounted on the mounting portion (3132).

6. The electronic device of one of the claims 4 to 5, comprising a display (330) disposed in the inner space (3101) to be visible from the outside through at least a part of the front cover (315),
wherein the first antenna structure (500) is configured to form the signals in a direction in which the rear cover (314) faces, and
wherein the rear cover is formed in a dielectric material.

7. The electronic device of one of the claims 4 to 6, comprising a second antenna structure (500-1) disposed in the inner space (3101) so as to have a substantially identical configuration as the first antenna structure (500),
wherein the second antenna structure (500-1) is disposed such that the first substrate surface (5901) of the second antenna structure (500-1) faces the side member (313).

8. The electronic device of claim 7, wherein the second antenna structure (500-1) is configured to form another signals toward the side member (313) in a direction perpendicular to the first direction.

9. The electronic device of claim 8, wherein the side member (313) comprises a conductive member (313-1) and a nonconductive member (313-2) coupled to the conductive member (313-1), and
wherein the second antenna structure (500-1) is configured to form the another signals to be radiated to the outside through the nonconductive member (313-2).

10. The electronic device of one of the claims 1 to 9, wherein the conductive structure comprises at least one of a battery, electric elements, and/or a conductive shield can disposed in the inner space.

11. The electronic device of one of the claims 1 to 10, wherein the conductive structure includes a first portion configured to reflect the signals and a second portion configured to diffract the signals, and
wherein the first portion comprises a stepped structure comprising at least one reflection portion (3134a) parallel to the first substrate surface (5901) and at least one planar portion (3134f) extending from the at least one reflection portion (3134a) so as to connect an adjacent reflection portion (3134b).

12. The electronic device of claim 11, wherein the second portion comprises at least one diffraction portion (3134d) which is a boundary area between the at least one reflection portion (3134a) and the at least one planar portion (3134f),
wherein the first antenna structure is configured to form the signals through the at least one reflection portion (3134a) and at least one diffraction portion (3134d).

13. The electronic device of claims 1 to 12, wherein the at least one housing comprises:
a first housing (310); and
a second housing (320) connected to the first housing (310) through a hinge structure (340) to be foldable with each other, and
wherein the first antenna structure (500) is disposed near the hinge structure (340) in the inner space (3101) of the first housing (310).

14. The electronic device of claim 13, wherein the conductive structure is at least a part of the hinge structure (340).

## Patentansprüche

1. Elektronische Vorrichtung, umfassend:
mindestens ein Gehäuse (310 mit einer Rückabdeckung (314);
eine leitende Struktur (3131), die in einem Innenraum (3101) des mindestens einen Gehäuses (310) angeordnet ist; und
eine erste Antennenstruktur (500), die in dem Innenraum (3101) angeordnet ist,
wobei die erste Antennenstruktur (500) umfasst:
ein Substrat (590) mit einer ersten Substratoberfläche (5901) und einer zweiten Substratoberfläche (5902), die der ersten Substratoberfläche (5901) entgegengesetzt gerichtet ist; und
eine Vielzahl von Antennenelementen (510, 520, 530, 540), die auf dem Substrat (590) angeordnet sind, wobei die Vielzahl von Antennenelementen dazu konfiguriert sind, Signale in einer Richtung zu der leitenden Struktur hin zu senden,
wobei die erste Antennenstruktur (500) derart angeordnet ist, dass die erste Substratoberfläche (5901) in einer ersten Richtung weist, um der leitenden Struktur (3131) zugewandt zu sein, und
wobei die leitende Struktur (3131) dazu konfiguriert ist, Richtung der von der Vielzahl von Antennenelementen gesendeten Signale zu ändern, um ein Strahlungsmuster durch die Rückabdeckung (314) hindurch auszubilden,
**dadurch gekennzeichnet, dass**
die erste Antennenstruktur (500) dazu konfiguriert ist, die Signale in einer zweiten Richtung senkrecht zu der ersten Richtung und/oder in einer Richtung zwischen der ersten Richtung und der zweiten Richtung auszubilden.

2. Elektronische Vorrichtung nach Anspruch 1, wobei die leitende Struktur (3131) so ausgebildet ist, dass sie einen Überdeckungsgrad (D) aufweist, sodass 100 % des Substrats (590) abgedeckt sind, wenn in der ersten Richtung betrachtet.

3. Elektronische Vorrichtung nach einem der Ansprüche 1 bis 2, wobei die leitende Struktur (3131) so ausgebildet ist, dass sie einen Überdeckungsgrad (D) aufweist, sodass 100 % der auf dem Substrat (590) angeordneten Vielzahl von Antennenelementen (510, 520, 530, 540) abgedeckt sind, wenn in der ersten Richtung betrachtet.

4. Elektronische Vorrichtung nach einem der Ansprüche 1 bis 3, wobei das mindestens eine Gehäuse (310) eine Frontabdeckung (315), die der Rückabdeckung (314) entgegengesetzt gerichtet ist, und ein **Seiten**element (313) umfasst, das den Innenraum (3101) zwischen der Frontabdeckung (315) und der Rückabdeckung (314) umgibt und ein leitendes Trägerelement (3131) umfasst, und
wobei die leitende Struktur durch das leitende Trägerelement (3131) ausgebildet ist.

5. Elektronische Vorrichtung nach Anspruch 4, wobei das leitende Trägerelement (3131) einen Montageabschnitt (3132) umfasst, so dass mindestens ein Teil des Substrats (590) darauf montiert ist, und
wobei die leitende Struktur ein Teil des leitenden Trägerelements (3131) ist, der der ersten Substratoberfläche (5901) des auf dem Montageabschnitt (3132) montierten Substrats (590) entspricht.

6. Elektronische Vorrichtung nach einem der Ansprüche 4 bis 5, umfassend eine Anzeige (330), die in dem Innenraum (3101) angeordnet ist, um von außen durch mindestens einen Teil der Frontabdeckung (315) sichtbar zu sein,
wobei die erste Antennenstruktur (500) dazu konfiguriert ist, die Signale in einer Richtung auszubilden, in die die Rückabdeckung (314) weist, und
wobei die Rückabdeckung aus einem dielektrischen Material ausgebildet ist.

7. Elektronische Vorrichtung nach einem der Ansprüche 4 bis 6, umfassend eine zweite Antennenstruktur (500-1), die in dem Innenraum (3101) angeordnet ist und eine im Wesentlichen gleiche Konfiguration wie die erste Antennenstruktur (500) aufweist,
wobei die zweite Antennenstruktur (500-1) derart angeordnet ist, dass die erste Substratoberfläche (5901) der zweiten Antennenstruktur (500-1) dem Seitenelement (313) zugewandt ist.

8. Elektronische Vorrichtung nach Anspruch 7, wobei die zweite Antennenstruktur (500-1) dazu konfiguriert ist, weitere Signale zu dem Seitenelement (313) in einer Richtung senkrecht zu der ersten Richtung hin auszubilden.

9. Elektronische Vorrichtung nach Anspruch 8, wobei das Seitenelement (313) ein leitendes Element (313-1) und ein mit dem leitenden Element (313-1) gekoppeltes nichtleitendes Element (313-2) umfasst, und
wobei die zweite Antennenstruktur (500-1) dazu konfiguriert ist, die weiteren Signale auszubilden, die durch das nichtleitende Element (313-2) nach außen abgestrahlt werden.

10. Elektronische Vorrichtung nach einem der Ansprüche 1 bis 9, wobei die leitende Struktur mindestens eines aus einer Batterie, elektrischen Elementen und/oder einem leitfähigen Abschirmbecher in dem Innenraum umfasst.

11. Elektronische Vorrichtung nach einem der Ansprüche 1 bis 10, wobei die leitende Struktur einen ersten Abschnitt, der dazu konfiguriert ist, die Signale zu reflektieren, und einen zweiten Abschnitt umfasst, der dazu konfiguriert ist, die Signale zu beugen, und
wobei der erste Abschnitt eine gestufte Struktur umfasst, die mindestens einen Reflexionsabschnitt (3134a) parallel zu der ersten Substratoberfläche (5901) und mindestens einen ebenen Abschnitt (3134f) umfasst, der sich von dem mindestens einen Reflexionsabschnitt (3134a) erstreckt, um einen benachbarten Reflexionsabschnitt (3134b) zu verbinden.

12. Elektronische Vorrichtung nach Anspruch 11, wobei der zweite Abschnitt mindestens einen Beugungsabschnitt (3134d) umfasst, der ein Grenzbereich zwischen dem mindestens einen Reflexionsabschnitt (3134a) und dem mindestens einen ebenen Abschnitt (3134f) ist,
wobei die erste Antennenstruktur dazu konfiguriert ist, die Signale durch den mindestens einen Reflexionsabschnitt (3134a) und mindestens einen Beugungsabschnitt (3134d) auszubilden.

13. Elektronische Vorrichtung nach einem der Ansprüche 1 bis 12, wobei das mindestens eine Gehäuse umfasst:
ein erstes Gehäuse (310); und
ein zweites Gehäuse (320), das mit dem ersten Gehäuse (310) über eine Scharnierstruktur (340) verbunden ist, um miteinander klappbar zu sein, und
wobei die erste Antennenstruktur (500) in dem Innenraum (3101) des ersten Gehäuses (310) nahe der Scharnierstruktur (340) angeordnet ist.

14. Elektronische Vorrichtung nach Anspruch 13, wobei die leitende Struktur mindestens ein Teil der Scharnierstruktur (340) ist.

## Revendications

1. Dispositif électronique comprenant :
au moins un boîtier (310) comprenant un couvercle arrière (314) ;
une structure conductrice (3131) disposée dans un espace intérieur (3101) de l'au moins un boîtier (310) ; et
une première structure d'antenne (500) disposée dans l'espace intérieur (3101),
dans lequel la première structure d'antenne (500) comprend :
un substrat (590) comprenant une première surface de substrat (5901) et une seconde surface de substrat (5902) orientée dans une direction opposée à la première surface de substrat (5901) ; et
une pluralité d'éléments d'antenne (510, 520, 530, 540) disposés sur le substrat (590), la pluralité d'éléments d'antenne étant configurée pour transmettre des signaux dans une direction vers la structure conductrice,
dans lequel la première structure d'antenne (500) est disposée de telle sorte que la première surface de substrat (5901) soit orientée dans une première direction de manière à faire face à la structure conductrice (3131), et
dans lequel la structure conductrice (3131) est configurée pour changer la direction des signaux transmis par la pluralité d'éléments d'antenne afin de former un diagramme de faisceau à travers le couvercle arrière (314),
**caractérisé en ce que**,
la première structure d'antenne (500) est configurée pour former les signaux dans une seconde direction perpendiculaire à la première direction et/ou une direction entre la première direction et la seconde direction.

2. Dispositif électronique selon la revendication 1, dans lequel la structure conductrice (3131) est formée pour avoir une quantité de chevauchement (D) telle que 100 % du substrat (590) soit couvert, lorsqu'il est vu dans la première direction.

3. Dispositif électronique selon l'une des revendications 1 à 2, dans lequel la structure conductrice (3131) est formée pour avoir une quantité de chevauchement (D) telle que 100 % de la pluralité d'éléments d'antenne (510, 520, 530, 540) disposés sur le substrat (590) soit couverte, lorsqu'elle est vue dans la première direction.

4. Dispositif électronique selon l'une des revendications 1 à 3, dans lequel l'au moins un boîtier (310) comprend un couvercle avant (315) orienté dans une direction opposée au couvercle arrière (314), et un élément latéral (313) entourant l'espace intérieur (3101) entre le couvercle avant (315) et le couvercle arrière (314) et comprenant un élément de support conducteur (3131), et
dans lequel la structure conductrice est formée par l'intermédiaire de l'élément de support conducteur (3131).

5. Dispositif électronique selon la revendication 4, dans lequel l'élément de support conducteur (3131) comprend une partie de montage (3132) de telle sorte qu'au moins une partie du substrat (590) soit montée sur celle-ci, et
dans lequel la structure conductrice est une partie de l'élément de support conducteur (3131) correspondant à la première surface de substrat (5901) du substrat (590) monté sur la partie de montage (3132).

6. Dispositif électronique selon l'une des revendications 4 à 5, comprenant un affichage (330) disposé dans l'espace intérieur (3101) pour être visible depuis l'extérieur à travers au moins une partie du couvercle avant (315),
dans lequel la première structure d'antenne (500) est configurée pour former les signaux dans une direction dans laquelle le couvercle arrière (314) est orienté, et
dans lequel le couvercle arrière est formé en un matériau diélectrique.

7. Dispositif électronique selon l'une des revendications 4 à 6, comprenant une seconde structure d'antenne (500-1) disposée dans l'espace intérieur (3101) de manière à avoir une configuration sensiblement identique à celle de la première structure d'antenne (500),
dans lequel la seconde structure d'antenne (500-1) est disposée de telle sorte que la première surface de substrat (5901) de la seconde structure d'antenne (500-1) fasse face à l'élément latéral (313).

8. Dispositif électronique selon la revendication 7, dans lequel la seconde structure d'antenne (500-1) est configurée pour former d'autres signaux vers l'élément latéral (313) dans une direction perpendiculaire à la première direction.

9. Dispositif électronique selon la revendication 8, dans lequel l'élément latéral (313) comprend un élément conducteur (313-1) et un élément non conducteur (313-2) couplé à l'élément conducteur (313-1), et
dans lequel la seconde structure d'antenne (500-1) est configurée pour former les autres signaux afin qu'ils soient rayonnés vers l'extérieur à travers l'élément non conducteur (313-2).

10. Dispositif électronique selon l'une des revendications 1 à 9, dans lequel la structure conductrice comprend au moins l'un parmi une batterie, des éléments électriques et/ou un boîtier de blindage conducteur disposé dans l'espace intérieur.

11. Dispositif électronique selon l'une des revendications 1 à 10, dans lequel la structure conductrice comprend une première partie configurée pour réfléchir les signaux et une seconde partie configurée pour diffracter les signaux, et
dans lequel la première partie comprend une structure étagée comprenant au moins une partie de réflexion (3134a) parallèle à la première surface de substrat (5901) et au moins une partie plane (3134f) s'étendant depuis l'au moins une partie de réflexion (3134a) de manière à relier une partie de réflexion adjacente (3134b).

12. Dispositif électronique selon la revendication 11, dans lequel la seconde partie comprend au moins une partie de diffraction (3134d) qui est une zone de limite entre l'au moins une partie de réflexion (3134a) et l'au moins une partie plane (3134f),
dans lequel la première structure d'antenne est configurée pour former les signaux à travers l'au moins une partie de réflexion (3134a) et au moins une partie de diffraction (3134d).

13. Dispositif électronique selon les revendications 1 à 12, dans lequel l'au moins un boîtier comprend :
un premier boîtier (310) ; et
un second boîtier (320) relié au premier boîtier (310) par l'intermédiaire d'une structure de charnière (340) pour être pliables l'un par rapport à l'autre, et
dans lequel la première structure d'antenne (500) est disposée à proximité de la structure de charnière (340) dans l'espace intérieur (3101) du premier boîtier (310).

14. Dispositif électronique selon la revendication 13, dans lequel la structure conductrice est au moins une partie de la structure de charnière (340).
